# EUROPEAN PATENT SPECIFICATION

(11) **EP 4 573 576 B1**
(45) Date of publication and mention of the grant of the patent: **22.07.2026**
(21) Application number: 23761218.9
(22) Date of filing: 18.08.2023
(51) Int. Cl.: G21F 9/00, G21F 9/30, B01D 59/00, G21H 1/00, B01D 59/42

(54) **DECONTAMINATION AND REGENERATION OF IRRADIATED GRAPHITE**
DEKONTAMINATION UND REGENERATION VON BESTRAHLTEM GRAPHIT
DÉCONTAMINATION ET RÉGÉNÉRATION DE GRAPHITE IRRADIÉ

(30) Priority: 18.08.2022 GB 202212053; 15.12.2022 GB 202218924
(43) Date of publication of application: 25.06.2025
(73) Proprietor: JACOBS U.K. LIMITED, London SE1 2QG (GB)
(72) Inventor: COTTAM, Martin, London SE1 2QG (GB)
(74) Representative: Stratagem IPM Limited
(86) International application number: PCT/GB2023/052167
(87) International publication number: WO 2024/038283

(56) References cited:
- DE-A1- 102011 016 272
- JP-A- H11 223 698
- KR-A- 20060 064 645
- RU-C2- 2 616 590

## Description

### FIELD OF THE INVENTION

The present invention relates to a method and device for sonoelectrochemically decontaminating irradiated nuclear graphite and, furthermore to the regeneration and reuse of graphite for energy storage devices and systems, and other products used in nuclear and non-nuclear industries.

### BACKGROUND TO THE INVENTION

There are large volumes of activated graphite associated with decommissioning Magnox and Advanced Gas Cooled reactors in the UK, and other reactor designs internationally. The large volumes of irradiated graphite are highly radioactive, caused by neutron activation of the constituent elements in both graphite and impurities, as well as potential contamination from the reactor core. The irradiated graphite is typically contaminated with a variety of radionuclide contamination including activated metals, actinides, lanthanoids, fission products, tritium and carbon 14. Carbon 14 has a very long half-life of 5,730 years which is a major concern for long term storage or disposal.

Owing to the high levels of radionuclide contamination, the majority of irradiated nuclear graphite is classified as Intermediate Level Waste (ILW) and must be disposed of at a Geological Disposal Facility (GDF), whose location has not been established at this time. Treating irradiated nuclear graphite waste such that the level of radionuclide contamination is reduced to Low Level Waste (LLW) classification, can offer considerable savings and risk mitigation.

Decontamination of irradiated nuclear graphite has been investigated using electrochemistry in molten salts and other oxidising agents. Electrochemical methods are capable of reducing contamination of irradiated nuclear graphite to low level waste classification levels depending on the initial contamination levels. Some of the known methods for decontaminating irradiated nuclear graphite focus on completely dissolving the graphite, including binder and filler areas. This results in a large volume of ILW for disposal, and decreases the decontamination efficiency and cost effectiveness of the method.

Studies have reported a total activity reduction of up to 80% for ⁶⁰Co contaminant from irradiated nuclear graphite in a molten salt medium. However, the activity levels for carbon 14 were only reduced by up to 15%.

Therefore, there is a requirement to enhance the electrochemical removal of contaminants from irradiated nuclear graphite such that the levels of carbon 14 and total activity can be reduced further. In particular, the method should target the removal of contaminants from irradiated nuclear graphite, such that the volume of ILW for disposal is minimised.

Patent document DE 10 2011 016272 A1 discloses a method and device for sonoelectrochemical decontamination of irradiated nuclear graphite.

It is against this background that the present invention has arisen.

### SUMMARY OF THE INVENTION

According to the present invention, there is provided a method for sonoelectrochemically decontaminating irradiated nuclear graphite, according to claim 1 and a respective device according to claim 8, wherein the method comprises suspending the irradiated nuclear graphite in an electrolyte; circulating the electrolyte through a flow reactor; subjecting the irradiated nuclear graphite to a sonoelectrochemical treatment comprising one or more electrochemical and ultrasonic cycles; wherein the sonoelectrochemical treatment exfoliates contaminated graphene and/or graphene derivatives from the irradiated nuclear graphite into the electrolyte; collecting the contaminated graphene and/or graphene derivatives removed from the irradiated nuclear graphite on one or more cathodes.

The present invention combines electrochemistry with sonochemistry to implement a novel sonoelectrochemical method for decontaminating irradiated nuclear graphite. In some embodiments, the method of the present invention decontaminates irradiated nuclear graphite to remove radionuclides, activation products and fission products. In some embodiments, the method of the present invention is particularly suitable for removing long-lived radionuclides such as ¹⁴C and ³⁶Cl, activation products such as ⁵⁷Co, ⁶⁰Co, ⁵⁴Mn, ⁵⁹Ni, ⁶³Ni, ²²Na, and fission products such as ¹³⁴Cs, ¹³⁷Cs, ⁹⁰Sr, ¹⁵²Eu, ¹⁵⁴Eu, ¹⁵⁵Eu, ¹⁴⁴Ce. In some embodiments, the method of the present invention can be used to treat irradiated nuclear graphite waste such that the level of radionuclide contamination is reduced to LLW classification, and the volume of ILW from the irradiated nuclear graphite is minimised. In some embodiments, this minimises the volume of ILW required to be stored in deep geological disposal facilities, and can offer considerable savings and risk mitigation.

Within the context of the present invention, the term 'electrochemistry' should be understood to refer to the branch of physical chemistry concerned with the relationship between electrical potential difference, as a measurable and quantitative phenomenon, and identifiable chemical change, with the potential difference as an outcome of a particular chemical change, or vice versa. Electrochemical processes utilize electrochemistry and include electrorefining and electrowinning processes.

Within the context of the present invention, the term 'electrorefining' should be understood to refer to processes which remove contamination from the irradiated nuclear graphite. In particular, the term electrorefining, as used herein, refers to the electrodeposition of contaminants which have been put into solution from the irradiated nuclear graphite. This process uses a similar process to that of the electrowinning process.

Within the context of the present invention, the term 'electrowinning' should be understood to refer to processes that remove contamination from solution and subsequently deposit the contamination on cathodes. The term electrowinning, as used herein, should be understood to refer to the electrodeposition of contaminants which have been previously leached into solution from the irradiated nuclear graphite. In this process, an electrical current passes from an inert anode (graphite where the oxidation occurs) through a leach solution consisting of dissolved metal ions, contamination and graphene derivatives. These constituents are recovered from the solution and deposited in an electroplating process onto the cathode where the reduction occurs.

Within the context of the present invention, it should be understood that any electrode used to remove contamination from the electrolyte may comprise one or more layers and/or coatings. Within the context of the present invention, it should be understood that the term 'electrowinning cathode' may refer to an electrode comprising one or more layers and/or coatings. In some embodiments, cathodes used in the electrowinning process may comprise a current collector layer chemically bonded and/or physically attached to at least one of the surfaces of the electrowinning cathode. In some embodiments, the current collector layer may be a bi-polar current collector layer. In some embodiments, the current collector layer may be any suitable conductive material such as, but not limited to, stainless steel, copper or aluminium. In some embodiments, the current collector layer may have a thickness greater than 100 µm. In some embodiments, a stainless steel such as SS316 may be preferable as it is compatible with many oxidising acids used in the decontamination and electrowinning processes, unlike copper and aluminium. In some embodiments, the current collector layer may be a foil.

Within the context of the present invention, the term 'contamination' or 'contaminants' should be understood to include, but not be limited to, activated metals, actinides, lanthanoids, fission products, tritium, carbon 14, graphene and graphene derivatives.

Within the context of the present invention, the term 'sonochemistry' should be understood to refer to the use of ultrasound to form acoustic cavitation in liquids, resulting in the initiation or enhancement of the chemical activity in the solution. There are three classes of sonochemical reactions and the term sonochemistry as used herein should be understood to refer to any one of these classes of reactions. The three classes of sonochemical reactions are: homogeneous sonochemistry of liquids, heterogeneous sonochemistry of liquid-liquid or solid-liquid systems, and, overlapping with the aforementioned, sonocatalysis (the catalysis or increasing the rate of a chemical reaction with ultrasound).

Within the context of the present invention, the term 'acoustic cavitation' should be understood to refer to the formation, growth and then collapse of microbubbles in solution. The collapsing bubble event is a microscopic implosion that generates high local turbulence and thermal energy. Moreover, the collapsing bubble can generate a high temperature up to 5000°C and high pressure up to 4000 atm. The implosion of the cavitation bubble also results in liquid jets of up to 280m/s velocity.

Ultrasound can greatly enhance chemical reactivity in a number of systems by as much as a million-fold; effectively acting to activate heterogeneous catalysts. In addition, in reactions at liquid-solid interfaces, ultrasound breaks up the solid pieces and exposes active clean surfaces through microjet pitting from cavitation near the surfaces and from fragmentation of solids by cavitation collapse nearby. This gives the solid reactant a larger surface area of active surfaces for the reaction to proceed over, increasing the observed rate of reaction.

Ultrasound has been applied to many electrochemical systems, and areas of electrochemistry as this technology offers several benefits over traditional technologies. The advantages are as follows: increase in electrodeposit/electroplating thickness; increase in electrochemical rates, yields and efficiencies; increase in electrodeposit porosity and hardness; increase in gas removal from electrochemical solutions; increase in electrode cleanliness and hence electrode surface activation; lowering in electrode overpotentials (due to metal depassivation and gas bubble removal generated at the electrode surface induced by cavitation and acoustic streaming); and suppression in electrode fouling.

The sonoelectrochemical method of the present invention applies ultrasound to the electrochemical removal of activated contaminants from irradiated nuclear graphite. In some embodiments, sonochemistry enhances the efficiency of the electrochemical process by the use of ultrasonic cavitation and chemical separation of the bonds between contaminants in sub surface layers and graphite pores, thereby improving decontamination factors. In some embodiments, irradiated graphite has a higher porosity than virgin graphite and ultrasonic cavitation impinges the surface of the pores to break bonds and separate the contaminants more effectively. In some embodiments, the creation of free radicals by ultrasonic cavitation also leads to chemical separation and degradation of target contamination.

According to the invention, the sonoelectrochemical method of the present invention can be used to electrochemically and ultrasonically remove activated contaminants from irradiated nuclear graphite. In some embodiments, the sonoelectrochemical method of the present invention may minimise the contamination level of irradiated nuclear graphite to low level and very low level or out of scope waste classification.

In some embodiments, radionuclides, activation products and/or fission products may accumulate on the outer (macroscopic) and inner (microscopic) surfaces of the irradiated nuclear graphite pores. In some embodiments, the electrochemical and sonochemical processes of the present invention can be targeted to remove radionuclides, activation products and/or fission products that are in loose chemical or physical bonds at the inner and/or outer surfaces of the irradiated nuclear graphite. This contrasts decontamination methods which may completely dissolve the graphite into a solution using nitric acid for example, and therefore do not minimise the volume of ILW, as the present invention achieves.

According to the invention, the method comprises: immersing the irradiated nuclear graphite in an electrolyte; and subjecting the irradiated nuclear graphite to a sonoelectrochemical treatment comprising one or more alternating and discrete electrochemical and ultrasonic pulses and cycles.

In some embodiments, the method for sonoelectrochemically decontaminating irradiated nuclear graphite may comprise cathodes in contact with the electrolyte. In some embodiments, the method may comprise the use of one or more electrowinning cathodes to attract and collect contaminants from the electrolyte. In some embodiments, the method may comprise the use of one or more ultrasonic cathodes which act as ultrasonic probe-type emitters in direct contact with the electrolyte. In some embodiments, one or more ultrasonic cathodes may be electrowinning cathodes and collect contaminants when not applying ultrasound to the electrolyte.

In some embodiments, the method for sonoelectrochemically decontaminating irradiated nuclear graphite may comprise positioning one or more ultrasonic cathodes around an anode basket containing irradiated graphite segments. In some embodiments, the irradiated nuclear graphite within the anode basket may be immersed in the electrolyte. In some embodiments, a power supply and a controller may be connected to the ultrasonic cathodes and the anode (basket containing graphite), to regulate the field potential and current density along with ultrasonic strength and frequency. In some embodiments, the ultrasonic cathodes are positioned to optimize the stand-off distance and promote ultrasonic streaming towards one or more electrowinning cathodes. In some embodiments, immersing the irradiated nuclear graphite in an electrolyte and then subjecting the graphite to a sonoelectrochemical treatment results in the mass transport of electrochemical species from the irradiated nuclear graphite into the electrolyte.

In some embodiments, the method for sonoelectrochemically decontaminating irradiated nuclear graphite may comprise pressurising the electrolyte and locating the ultrasonic cathode and anode externally in a flow cell. In some embodiments, the electrolyte may be pressurised between 0 and 5 bar. In some embodiments, the electrolyte may be pressurised to more than 0, 1, 2, 3 or 4 bar. In some embodiments, the electrolyte may be pressurised to less than 5, 4, 3, 2, or 1 bar. In some embodiments, flow may be provided across the anode.

In some embodiments, this enhances the sonoelectrochemical process and penetrates the pores of the graphite more effectively to improve decontamination. In some embodiments, the decontaminated graphite may be separated or collected in a filter or centrifuge or other means.

In some embodiments, the application of one or more ultrasonic cycles to the irradiated nuclear graphite significantly enhances the mass transport of electrochemical species compared to the application of electrochemical cycles alone. In some embodiments, the ultrasonic cycles enhance the conventional electrochemical processes by introducing the beneficial effects of ultrasonics and acoustic cavitation to the electrochemical molten salt and other oxidising processes. During the acoustic cavitation process, high temperatures, pressures, and cooling rates can be achieved upon the collapse of the bubble, which permit access to a range of chemical reaction space normally not accessible.

According to the invention, the method may further comprise the step of collecting the contaminants removed from the irradiated nuclear graphite on one or more cathodes.

In some embodiments, after the irradiated nuclear graphite has been subjected to sonoelectrochemical decontamination such that the contaminants are transported into the electrolyte, they may subsequently undergo mass transport from the bulk solution to the surface of the electrowinning cathodes where they are collected. In some embodiments, the ultrasonic cathodes may apply a low level of ultrasound to the electrolyte or be placed in an 'off' state in which no ultrasound is applied to the electrolyte. In some embodiments, the ultrasonic cathodes may then be use to collect contaminants from the electrolyte. Therefore, in some embodiments, the ultrasonic cathodes may be electrowinning cathodes. In some embodiments, the ultrasonic cathodes and one or more cathodes collecting contaminants may be separate. In some embodiments, removing the contaminants from the electrolyte onto electrowinning cathodes decontaminates and cleans the electrolyte, thereby minimising the generation of intermediate level waste.

In some embodiments, the removal of contamination from the electrolyte may be performed continuously, in parallel with the sonoelectrochemical decontamination of the irradiated nuclear graphite, thus improving the decontamination process efficiency. In some embodiments, the removal of contaminants from the electrolyte may be performed in batch mode. In some embodiments, only the desired contaminants are electrodeposited onto the electrowinning cathodes. In some embodiments, the electrowinning cathodes may be plates, 3D open cell metal foam, or ceramic 3D porous structures. In some embodiments, a 3D open cell structure is preferable owing to its high surface area which maximises the retention of contaminants.

In some embodiments, once the electrowinning cathodes have collected contaminants, they may be removed, rinsed, dried and loaded into intermediate level waste containers for processing and disposal at a licensed burial facility, or used for battery energy storage systems and other products.

In some embodiments, one or more of the cathodes may comprise a bi-polar current collector layer. In some embodiments, the method may further comprise the step of collecting contaminants removed from the irradiated nuclear graphite onto the bi-polar current collectors and one or more cathodes. In some embodiments, one or more of the cathodes may comprise a bi-polar current collector layer. In some embodiments, the method may further comprise the step of collecting contaminants removed from the irradiated nuclear graphite onto the bi-polar current collector layer of the one or more cathodes. In some embodiments, the sonoelectrochemical method for decontaminating irradiated nuclear graphite can be used to form contaminant coated bi-polar current collectors. In some embodiments, the bi-polar current collectors may be coated with activated metals, actinides, lanthanoids, fission products, tritium, carbon 14, graphene and graphene derivatives. In some embodiments, by coating the surface of the bi-polar current collector with contaminants and/or graphene, and/or graphene derivatives, the electrochemical properties can be increased. In some embodiments, in which the bi-polar current collector is SS316, by coating SS316 in contaminants and/or graphene and/or graphene derivatives, the electrical conductivity can be increased such that it is equivalent to copper.

In some embodiments, the method comprises exposing the irradiated nuclear graphite to a positive electrical potential.

In some embodiments, various electrochemical and ultrasonic methodologies may be applied to sonoelectrochemically decontaminate irradiated nuclear graphite. In some embodiments, in order to maximise the efficiency of the sonoelectrochemical processes, various experimental parameters can be optimised including the process equipment design, ultrasonic frequency, acoustic power, irradiation time, ultrasonic transducer-electrode distance, electrode materials, electrode potentials, temperature, pH, conductivity, pressure and electrolyte compositions. In some embodiments, the parameters are optimised to maximise contaminant removal from the irradiated nuclear graphite whilst minimising weight loss from the irradiated nuclear graphite. In some embodiments, the irradiated nuclear graphite can be disposed of in low level waste facilities after treatment whereas the contamination in the electrolyte may be disposed of in intermediate level waste facilities. Therefore minimising weight loss from the graphite prevents excess graphite from entering the electrolyte and increasing the volume of intermediate level waste. In some embodiments, the parameters are dependent on the amount of irradiated nuclear graphite to be decontaminated.

In some embodiments, adjusting the frequency and power of the ultrasonic cycle facilitates the acoustic cavitation process. In some embodiments, the bursting of cavitation bubbles on the surface of the irradiated nuclear graphite substrate and inside pores dislodges contaminants embedded in them and enhances mass transfer rates by microstreaming. In some embodiments, the acoustic cavitation process facilitated by the application of ultrasound to the irradiated nuclear graphite leads to the production of highly reactive radicals such as OH, O and H₂O₂. In some embodiments, these highly reactive radicals act as strong oxidants to oxidize the graphite and release contaminants such as ¹⁴C. In some embodiments, the creation of free radicals by ultrasonic cavitation may be the main mechanism that leads to chemical degradation of target contamination.

In some embodiments, by varying the operating parameters which include the ultrasonic power, current density, deposition potential, and ultrasonic versus electrochemical pulse times as well as the pH, temperature, pressure and composition of the electrolyte in the sonoelectrochemical cell, the amount of the contaminant to be removed from the irradiated nuclear graphite can be optimised. In some embodiments, this may enhance the removal, transportation and loading of the contaminant onto the porous electrowinning cathodes, whilst minimising weight loss from the graphite.

### Removing contaminants with acid oxidising agents

In some embodiments, the method may comprise immersing the irradiated nuclear graphite in one or more acid oxidising agents. In some embodiments, the method may comprise immersing the irradiated nuclear graphite in an oxidising agent electrolyte. In some embodiments, the oxidising agents may include, but are not limited to, nitric acid, sulphuric acid, sodium hydroxide, hydrogen peroxide, nitric acid and/or potassium permanganate. In some embodiments, the oxidising agent may be a combination of nitric acid and potassium permanganate, sulphuric acid and potassium permanganate, nitric acid and sulphuric acid and hydrogen peroxide, and/or sodium hydroxide and/or hydrogen peroxide and potassium permanganate. In some embodiments, the method may further comprise the step of pressurising the electrolyte.

In some embodiments, the method may separate and exfoliate contaminated layers of graphene from the irradiated nuclear graphite using one or more acid oxidising agents. In some embodiments, the method may separate and exfoliate contaminated layers of graphene from the irradiated nuclear graphite using sulphuric acid, or sodium hydroxide and hydrogen peroxide optionally with functional additives such as potassium permanganate. In some embodiments, immersing the irradiated nuclear graphite in an alkali salt electrolyte creates highly reactive radicals to enhance the sonoelectrochemical treatment, and to separate and remove contamination and graphene layers without destroying or dissolving the graphite.

In some embodiments, the method of the present invention functionalises and increases the interstitial gaps between the contaminated graphene layers, before gently exfoliating and suspending these layers in the electrolyte solution. In some embodiments, the method of the present invention offers an improvement over the state of the art by using a less aggressive electrolyte salt, which does not result in the destruction or disintegration of binder or filler areas. Filler materials are typically natural graphite or petroleum coke, whilst binder materials are typically coal tar or phenolic resin. In some embodiments, the method of the present invention contrasts known methods of decontamination, which separate, destroy or disintegrate filler and binder areas. In some embodiments, the method of the present invention avoids the removal of excessive amounts of graphite, thereby minimising the volume of ILW for disposal.

### Removing contaminants with molten salt electrolyte

In some embodiments, the method may comprise immersing the irradiated nuclear graphite in a molten salt electrolyte. In some embodiments, the molten salt electrolyte may comprise one or more alkali metal halide salts, alkaline earth metal halide salts, strong bases, or combinations thereof.

In some embodiments, the method may be carried out in an inert atmosphere. In some embodiments, the method may be carried out in air. In some embodiments, the inert atmosphere may be argon. In some embodiments, an inert atmosphere prevents oxidization of the molten salt electrolyte.

In some embodiments, the molten salt electrolyte may be an ionic molten salt electrolyte. In some embodiments, the ionic molten salt electrolyte may comprise one or more ionic electrolytes including, but not limited to, LiCl, NaCl, KCl or LiBr amongst others. In some embodiments, a LiCl-CaCl₂ eutectic melt electrolyte may be used as it operates at a low temperature compared with simple salts, has a high energy efficiency and high reducing properties along with a relatively low energy cost. In some embodiments, KCl may be added to further lower the operating temperature.

In some embodiments, after removal of contaminants from the irradiated nuclear graphite into the molten salt electrolyte, the contaminants can be removed from the molten salt electrolyte and collected onto electrowinning cathodes. In some embodiments, the contaminant coated electrowinning cathodes may be removed from the sonoelectrochemical cell and loaded into ILW 3m³ and 4M boxes for storage at the Geological Disposal Facility.

In some embodiments, the anode basket containing the irradiated nuclear graphite may be removed from a sonoelectrochemical cell after undergoing a sonoelectrochemical decontamination cycle. In some embodiments, the anode basket containing the irradiated nuclear graphite may subsequently be immersed in the electrolyte of another sonoelectrochemical cell and undergo an additional sonoelectrochemical cycle. In some embodiments, the method may comprise immersing the irradiated nuclear graphite in an acid oxidising agent electrolyte and subsequently a molten salt electrolyte.

### Forming and removing graphene and graphene derivatives

In some embodiments, the sonoelectrochemical method for decontaminating irradiated nuclear graphite may comprise the step of forming graphene and/or graphene derivatives.

Within the context of the present invention, the term 'graphene derivatives' should be understood to include, but not be limited to, graphene oxides, reduced graphene oxide, reduced graphene oxide decorated with metallic nanoparticles or nano diamonds, functionalised graphene based nano-materials and/or graphene oxide quantum dots.

In some embodiments, the method may comprise the step of creating graphene oxide, reduced graphene oxide, graphene layers, nano-scrolls and/or nano-diamonds.

In some embodiments, the sonoelectrochemical method for decontaminating irradiated nuclear graphite may comprise the step of functionalising irradiated nuclear graphite to form graphene or graphene derivatives. In some embodiments, the irradiated nuclear graphite may be functionalised to produce graphene oxide, reduced graphene oxide and/or graphene depending on the reuse requirements and product application.

In some embodiments, the functionalisation of irradiated nuclear graphite may occur through exfoliation of the graphite layers. In some embodiments, the functionalisation of graphite may use Graphite Intercalation Compounds (GICs). GICs may be formed by the insertion of atomic or molecular layers of a guest chemical between the layers in the irradiated nuclear graphite material. In some embodiments, the guest chemical may be a transition metal or a metal oxide. In some embodiments, sulphuric acid may be used to add functional groups between the layers of graphite in the presence of an oxidising reagent such as potassium permanganate. In some embodiments, the GIC may be a complex material having a formula CXm, where the ion Xn+ or Xn- is inserted (intercalated) between the oppositely charged carbon layers. In some embodiments, the intercalation between the graphite layers expands the interlayer distance and weakens the bonds which exfoliates layers and exposes the porous structure.

In some embodiments, graphene and/or graphene derivatives may be exfoliated from the irradiated nuclear graphite into the electrolyte during the sonoelectrochemical decontamination process. In some embodiments, the exfoliation of irradiated nuclear graphite aids in the decontamination process by exposing the porous structure and enabling contaminants to be removed from within.

In some embodiments, the step of forming graphene and/or graphene derivatives may take place using an acid oxidising agent electrolyte or may utilise a molten salt electrolyte. In some embodiments, graphene oxide may be formed using an acid oxidising agent electrolyte. In some embodiments, graphene may be formed using a molten salt electrolyte.

In some embodiments, the formed graphene and/or graphene derivatives may be functionalised. In some embodiments, graphene and/or graphene derivatives may be modified by tuning the composition, framework, dimension, and/or morphology. It some embodiments, graphene can be functionalised by chemical oxidation, doping, covalent and non-covalent modification, and hybridization with other materials. In some embodiments, the functionalisation of graphene may yield various products including, but not limited to, graphene oxide, nano graphene, graphene nanoribbons (GNRs), graphene nanomeshes, and graphene-polymer hybrids. In some embodiments, the properties of graphene such as its composition, size, shape, and structure, may be modified after functionalisation, leading to changes in its electronic structure, surface chemistry, solubility, and mechanical and chemical properties.

In some embodiments, functionalized graphene composites may be formed. Within the context of the present invention 'functionalised graphene composites' should be understood to refer to hybrids of graphene (or functionalized graphene) with other materials, including but not limited to small molecules, polymers, metals, inorganic compounds, and carbon nanotubes (CNTs).

### Collecting graphene/graphene derivatives onto electrowinning cathodes

According to the invention, the contaminant removed from the irradiated nuclear graphite and collected on one or more cathodes may comprise graphene, graphene derivatives, ¹⁴C, activated metals, lanthanides and/or actinides.

In some embodiments, the contaminated graphene and/or graphene derivatives may be removed from the electrolyte and collected onto the electrowinning cathodes. In some embodiments, in which the electrowinning cathodes comprise a bi-polar current collector layer, the graphene and/or graphene derivatives may be removed from the electrolyte and collected onto the bi-polar current collector layer of the electrowinning cathode. In some embodiments, the graphene and/or graphene derivatives can interact with other contaminants in the electrolyte such as Am(iii), Th(iv), Pu(iv), Np(v), U(vi), Cs(i), Sr(ii), Eu(iii) and Tc(vii). The adsorption of contaminants onto the graphene and/or graphene derivatives may facilitate the collection and removal of contaminants from the electrolyte onto electrowinning cathodes.

In some embodiments, the irradiated nuclear graphite may first be exfoliated in an acid oxidising agent electrolyte such that graphene or graphene oxide is leached into the electrolyte and collected onto the electrowinning cathodes. In some embodiments, the irradiated nuclear graphite may subsequently be exfoliated in a molten salt electrolyte such that graphene leaches into the electrolyte and is subsequently collected and layered on top of the graphene oxide layer on the electrowinning cathodes. In some embodiments, an electrowinning cathode comprising graphene overlayed on top of graphene oxide can have an enhanced performance when subsequently used to form a battery and/or supercapacitor. In some embodiments, an electrowinning cathode comprising a bi-polar current collector layer overlaid with graphene and/or graphene derivatives may have an enhanced performance when later used to form a battery and/or supercapacitor.

### Using the graphene and/or graphene derivative coated electrowinning cathodes in energy storage devices

In some embodiments, the sonoelectrochemical method of the present invention may be used to form contaminant and/or graphene and/or graphene derivative coated electrowinning cathodes. In some embodiments, the electrowinning cathodes which have collected the contaminants and/or graphene and/or graphene derivatives may be subsequently removed from the sonoelectrochemical cell and utilised in products for nuclear and non-nuclear applications. In some embodiments, the contaminant and/or graphene and/or graphene derivative coated electrowinning cathodes may be used in battery energy storage systems and other energy storage devices. In some embodiments, the contaminant and/or graphene and/or graphene derivative coated electrowinning cathodes may be used to convert waste storage containers into battery and/or supercapacitor energy storage systems for Intermediate Level Waste and Low Level Waste storage.

In some embodiments, the electrowinning cathodes may comprise a bi-polar current collector layer and the contaminant and/or graphene and/or graphene derivatives may coat the bi-polar current collector layer of the electrowinning cathodes. In some embodiments, the electrowinning cathodes comprising the contaminant coated bi-polar current collector layer may be subsequently removed from the sonoelectrochemical cell and utilised in products for nuclear and non-nuclear applications. In some embodiments, the electrowinning cathodes comprising the contaminant coated bi-polar current collector layer may be used in battery energy storage systems and other energy storage such as supercapacitors. In some embodiments, the electrowinning cathodes comprising the contaminant coated bi-polar current collector layer may be used to convert waste storage containers into battery and/or supercapacitor energy storage systems for Intermediate Level Waste and Low Level Waste storage and disposal facilities.

In some embodiments, the contaminant and/or graphene, and/or graphene derivative coated electrowinning cathodes, optionally comprising a bi-polar current collector, may be combined with a non-flammable electrolyte and used to form hybrid battery/capacitors. In some embodiments, in order to ensure the electrolyte used in the battery/capacitor is non-flammable, fire retardant additives may be added to the electrolyte to improve the safety of the hybrid battery/capacitor. In some embodiments, fire retardants such as, but not limited to, fluroethylene carbonate (FEC), trimethyl phosphate (TMP) and/or adiponitrile (AN) may be added to the electrolyte. In some embodiments, the electrolyte may be a non-flammable polymer electrolyte such as, but not limited to, polyacrylonitrile/poly(vinyl alcohol) (PAN)/(PVA) (20:80), poly (acrylic anyhdride-2-methyl-acrylic acid-2-oxirane-ethyl estermethyl methacrylate) (PAMM) and/or poly(*ε*-caprolactone) /succinonitrile (PCL/SN) with PAN skeleton.

In some embodiments, PVDF-HFP/PMMA/PVAc-based Gel Polymer Electrolytes comprising poly(vinylidene fluoride-co-hexafluoropropylene) (PVDF-co-HFP) and poly(methyl methacrylate) (PMMA) host polymers and poly(vinyl acetate) (PVAc) as a guest polymer may be used.

PVDF-HFP is a promising polymer host owing to its excellent properties, such as semi-crystallinity, wider electrochemical stability, and excellent thermal and mechanical stability. The crystalline part (VDF unit) gives the mechanical strength of the polymer matrix, and the amorphous part (HFP unit) arrests the lithium electrolyte and enhances ionic conductivity. PMMA is added to increase the ionic movement. The polymer matrix with a high amorphous nature enables local relaxation and creates segmental motion of the polymer chain for faster ion transport. Using PVAc-PMMA polymer blend electrolytes results in better electrochemical performance but forfeits its mechanical stability . Thus, PVDF-HFP and PMMA-PVAc combines all of the advantages to provide easy film formation, excellent mechanical strength, high solubility, and low glass transition temperature.

Thermal shrinkage behaviour describes the ability of the polymer membrane to maintain its dimensions and integrity at higher temperatures, which is important for avoiding contact between positive and negative electrodes. PVDF/HFP/PMMA/PVAc exhibits only slight dimensional change at 180°C. At this temperature traditional Li-ion separators such as Celguard^{®} completely lose their dimensions and form.

High concentrated electrolytes (HCE) combined with mechanically and thermally stable gel polymers with cross linked ion pathways and flame-retardant solvents, provide operating voltages in the 4.5-5V region with inherent protection measures to prevent thermal runaway.

As a functional additive, succinonitrile (SN) can be used in lithium salt electrolytes to broaden the oxidation electrochemical window of the electrolyte and significantly improve its ionic conductivity and high-voltage cycle performance . It can also be added to gel polymers as a flame retardant and to increase electrical conductivity and thermal stability.

Another functional additive, Adiponitrile (ADN) is considered as a safe electrolyte because it is chemically stable and has a high boiling and flash point and low vapor pressure. ADN is used as a single-electrolyte solvent with lithium bis(trimethylsulfonyl)imide (LiTFSI) since it exhibits high electrochemical stability, indicating its potential as a suitable electrolyte for safer Li ions cells without compromising the performance. ADN also provides excellent temperature stability from -30 °C to 180 °C.

In some embodiments, the sonoelectrochemical method of the present invention may be used to form nano-diamonds from the irradiated nuclear graphite. In some embodiments, collecting nano-diamonds on the electrowinning cathodes can improve the electrical conductivity of the cathode for use in energy storage systems and other devices.

### Other means of decontaminating irradiated nuclear graphite and forming coated electrowinning cathodes for use in energy storage devices

Whilst in some embodiments a sonoelectrochemical method for decontaminating irradiated nuclear graphite and forming coated electrodes is preferable owing to its increased efficiency, other methods for decontaminating irradiated nuclear graphite may be used to form contaminant and/or graphene and/or graphene coated electrodes, optionally comprising bi-polar current collectors. In some embodiments, the method for decontaminating irradiated nuclear graphite and forming coated electrodes may be purely electrochemical. In some embodiments, the method for decontaminating irradiated nuclear graphite and forming coated electrodes may be purely sonochemical.

In some embodiments, contaminant and/or graphene and/or graphene derivative coated electrodes formed by decontaminating irradiated nuclear graphite using sonoelectrochemistry, sonochemistry or electrochemistry, may be subsequently used to form batteries, capacitors, supercapacitors and hybrid ultracapacitors.

### Hybrid Graphene Alpha/Beta/Gamma Battery and Ultracapacitor

In some embodiments, contaminant and/or graphene and/or graphene derivative coated electrodes formed by decontaminating irradiated nuclear graphite using sonoelectrochemistry, sonochemistry or electrochemistry may be subsequently used to form a graphene ultracapacitor. In some embodiments the graphene ultracapacitor may comprise lithium, sodium, magnesium, iron and/or other electrochemical enhancing materials. In some embodiments, the graphene ultracapacitor may not comprise lithium, sodium, magnesium, iron and/or other electrochemical enhancing materials.

In some embodiments, contaminant and/or graphene and/or graphene derivative coated electrodes formed by decontaminating irradiated nuclear graphite using sonoelectrochemistry, sonochemistry or electrochemistry may be subsequently used to form graphene alpha/beta/gamma battery cells, which can be incorporated into a stacked bi-polar hybrid ultracapacitor.

In some embodiments, contaminant and/or graphene and/or graphene derivative coated electrodes formed by decontaminating irradiated nuclear graphite using sonoelectrochemistry, sonochemistry or electrochemistry may be subsequently used to form a graphene hybrid beta battery and ultracapacitor. In some embodiments the graphene hybrid beta battery and ultracapacitor may comprise lithium, sodium, magnesium, iron and/or other electrochemical enhancing materials. In some embodiments, the graphene hybrid beta battery and ultracapacitor may not comprise lithium, sodium, magnesium, iron and/or other electrochemical enhancing materials.

In some embodiments, n-type or p-type coated porous nickel foam electrodes, coated with contaminants via the method of the present invention, may be incorporated into the anode or cathode of a single or bi-polar cell battery. In some embodiments, the contaminant and/or graphene and/or graphene derivative coated electrodes, may form a Shottky type junction with graphene which creates an internal electric field to separate electron hole pairs in the depletion region. Beta radiation is emitted from the beta emitting contamination coated on the porous nickel foam anode or cathode during the electrowinning process. The beta radiation is therefore derived from graphite waste material from a decommissioned reactor as opposed to radiation from an operating reactor, as is required in known systems. In some embodiments, other methods such as p-n type junctions and p-i-n type junctions may be used.

In some embodiments, silicon and other substrates may be used as an alternative to nickel foam.

In some embodiments, a hybrid bi-polar graphene alpha/beta/gamma battery cell may generate high energy and low-medium power for up to thousands of years based on the half-life of the alpha/beta/gamma emitting radionuclides. In some embodiments, this energy may be used to power critical mission applications and safety systems where uninterrupted power supplies are required.

In some embodiments, alpha/beta/gamma battery cells may be formed for both the anodes and the cathodes of the ultracapacitor.

### Contaminant removal

In some embodiments, the contaminant removed from the irradiated nuclear graphite and collected on one or more cathodes may comprise one or more of graphene, graphene derivatives, ¹⁴C, activated metals, lanthanides and actinides. In some embodiments, the contaminant removed from the irradiated nuclear graphite and collected on one or more cathodes may be one or more of Am(iii), Th(iv), Pu(iv), Np(v), U(vi), Cs(i), Sr(ii), Eu(iii) and Tc(vii).

In some embodiments, an acid oxidising agent electrolyte or molten salt electrolyte may be used to remove ¹⁴C contamination from irradiated nuclear graphite. In some embodiments, ¹⁴C may be removed from the irradiated nuclear graphite into the electrolyte and combine with calcium carbonate salt (CaCO₃) in the electrolyte. In some embodiments, the radioactive ¹⁴CO₂ may be immobilised to form a stable Ca¹⁴CO₃ product. In some embodiments, Ca¹⁴CO₃ is regarded as a suitable waste form of ¹⁴CO₂ because of its excellent thermal and chemical stability. In some embodiments, Ca¹⁴CO₃ may be collected and removed from the electrolyte onto electrowinning cathodes. In some embodiments, the Ca¹⁴CO₃ coated electrowinning cathodes may be suitable for cementation and long-term storage or disposal.

### Continuous vs. pulsed cycles

In some embodiments, the method may comprise subjecting the irradiated nuclear graphite to continuous ultrasonic treatment. In some embodiments, the method may comprise applying ultrasound to the irradiated nuclear graphite in pulses. In some embodiments, ultrasonic pulses include a period in which the ultrasound is 'on', followed by a period in which the ultrasound is 'off'.

In some embodiments, the method may comprise subjecting the irradiated nuclear graphite to continuous electrochemical treatment. In some embodiments, the method may comprise applying an electrochemical treatment to the irradiated nuclear graphite in pulses. In some embodiments, electrochemical pulses may include a period in which the current applied to the cell is 'on' followed by a period in which the current applied to the cell is 'off'.

In some embodiments, the method may comprise subjecting the irradiated nuclear graphite to continuous electrochemical and ultrasonic cycles.

In some embodiments, the method may comprise subjecting the irradiated nuclear graphite to continuous electrochemical treatment and pulsed ultrasonic treatment.

In some embodiments, the method may comprise subjecting the irradiated nuclear graphite to a plurality of electrochemical and ultrasonic pulses. In some embodiments, the electrochemical and ultrasonic pulses may comprise application of an electric current pulse to the irradiated nuclear graphite, followed by an ultrasonic pulse. In some embodiments, electrochemical and ultrasonic pulses can be used to remove contamination from the sub-surface of the graphite and from the pores within the graphite. In some embodiments, ultrasonic pulses can be used to improve the sonochemistry of the electrolyte and the mass transport of contaminants. In some embodiments, pulsed ultrasound may be less energy demanding than continuous ultrasound cycles.

In some embodiments, there may be provided a method for sonoelectrochemically decontaminating irradiated nuclear graphite, the method comprising immersing the irradiated nuclear graphite in an electrolyte; and subjecting the irradiated nuclear graphite to a sonoelectrochemical treatment comprising one or more electrochemical and ultrasonic cycles; wherein the sonoelectrochemical treatment comprises subjecting the irradiated nuclear graphite to a plurality of alternating electrochemical and ultrasonic pulses.

In some embodiments, the electrochemical and ultrasonic pulses are applied to the irradiated nuclear graphite as a stepped pulse wave to provide a percussion action of varying intensity. In some embodiments, the intensity of the ultrasonic pulse may be variable from 0-100%. In some embodiments, the electrochemical and ultrasonic pulses may be applied with a relaxation pause between successive alternating pulses. In some embodiments, the alternating electrochemical and ultrasonic pulses are advantageous compared to known methods, which use simultaneous immersion in an electrolyte and ultrasound. In some embodiments, the alternating pulses gently separate and release the contaminated graphite layers and surface contamination in the internal pores, as opposed to dissolving the graphite. This can improve the decontamination efficiency and minimise weight loss from the graphite, thereby minimising the volume of ILW to be disposed of in the permanent geological burial facility. In some embodiments, the current density of the electrochemical pulses depends on the amount of irradiated nuclear graphite being decontaminated. In some embodiments, the current density of the electrochemical pulses depends on the size of the electrochemical cell and the size of the anode basket holding the irradiated nuclear graphite.

In some embodiments, current density can affect the migration rate of electrons in the solution, and therefore optimizing the current density can maximize the efficiency of the sonoelectrochemical decontamination process. In some embodiments, an increased electrochemical pulse current density may result in an increased decontamination efficiency.

In some embodiments, the method may further comprise the step of removing the contaminant coated cathodes from the device and using the cathodes in further applications. In some embodiments, the contaminant loaded cathodes may be subsequently used in nuclear and non-nuclear industries including, but not limited to, batteries, supercapacitors, ultracapacitors, and fuel cells. In some embodiments, the method may further comprise the step of removing the contaminant coated cathodes from the device and using them to form energy storage devices and systems. In some embodiments, the energy storage devices and systems may comprise a substantially non-flammable electrolyte.

### Sonoelectrochemical device

According to the invention, there is provided a sonoelectrochemical device for removing contaminated graphene and/ or graphene derivatives from irradiated nuclear graphite suspended in an electrolyte, the device comprising:a flow reactor configured to circulate the irradiated nuclear graphite and electrolyte suspension, wherein the flow reactor comprises: an anode in contact with the electrolyte; one or more cathodes in contact with the electrolyte and configured to receive the contaminated graphene and/or graphene derivatives from the electrolyte; one or more ultrasonic transducers in contact with the electrolyte; and a controller configured to apply ultrasound to the electrolyte through the one or more ultrasonic transducers and an electrical potential between the anode and one or more cathodes to cause the exfoliation of contaminated graphene and/or graphene derivatives from the irradiated nuclear graphite into the electrolyte, according to claim 8.

In some embodiments, the sonoelectrochemical device enables selected contaminants in the irradiated nuclear graphite to undergo anodic dissolution into the electrolyte by the application of an electrical potential and ultrasound to the irradiated nuclear graphite by the controller. The device also facilitates an electrowinning process which removes selected radioactive contaminants from the electrolyte, and then electrodeposits the selected contaminants onto the one or more cathodes.

According to the invention, the sonoelectrochemical device comprises a sonoelectrochemical flow reactor. In some embodiments, the sonoelectrochemical device may comprise a sonoelectrochemical flow reactor column. In some embodiments, the diameter and length of the flow column may be varied to increase the throughput and decontamination residence time.

In some embodiments, the sonoelectrochemical device may use a flow cell under pressure and continuous flow conditions to remove selected contaminants from irradiated nuclear graphite. In some embodiments, a sonoelectrochemical flow reactor column may use an acid or alkali salt electrolyte such as sodium hydroxide, plus hydrogen peroxide and functional additives. In some embodiments, graphite particulate suspended in the alkali salt electrolyte may be recirculated through the pressurised sonoelectrochemical flow reactor column continuously. In some embodiments, the sonoelectrochemical flow reactor column comprises a combined ultrasonic transducer/cathode electrode surrounded by an anode tube whose separation from the cathode is variable to provide the optimum standoff distance and decontamination performance by ensuring a consistent exposure to the sonoelectrochemical treatment along the full length of the flow reactor column. In some embodiments, as graphite passes through the sonoelectrochemical corridor between the ultrasonic cathode and anode tube wall in the flow reactor, it rotates in multiple orientations. In some embodiments, this exposes all external surfaces and internal pores to the alternating sonoelectrochemical treatment.

In some embodiments, the contaminants removed from the irradiated nuclear graphite and collected on the one or more cathodes may comprise one or more of ¹⁴C, activated metals, lanthanides and actinides. In some embodiments, the one or more cathodes may comprise a bi-polar current collector layer and the contaminants may be removed from the irradiated nuclear graphite and collected on the current collector layer of the one or more cathodes. In some embodiments, the one or more cathodes may comprise one or more bi-polar current collectors. In some embodiments, the contaminants may be removed from the irradiated nuclear graphite and collected on the one or more bi-polar current collectors.

In some embodiments, the one or more ultrasonic transducers may be an ultrasonic transducer cathode. In some embodiments, immersing the ultrasonic transducers directly into the electrolyte enables ultrasound to be applied directly to the electrolyte. In some embodiments, the level of ultrasound applied to the irradiated nuclear graphite using ultrasonic transducers is above and beyond that which can be achieved by sonicating the exterior of the electrochemical device. In some embodiments, the one or more ultrasonic transducers may be the one or more cathodes configured to receive the selected contaminants from the electrolyte. In some embodiments, in which the ultrasonic cathodes act as electrowinning cathodes, low levels of ultrasound are applied to the electrolyte or the ultrasonic electrodes are switched to an 'off' state. In some embodiments, the ultrasonic transducer cathodes may be separate from the one or more cathodes configured to receive the selected contaminants from the electrolyte.

In some embodiments, multiple ultrasonic transducer cathodes may be inserted around the anode, thereby providing effective standoff distance and scalability. In some embodiments, surrounding the anode basket with multiple ultrasonic transducer cathodes provides an even distribution of the ultrasonic field on all sides of the anode basket and provides a uniform exposure of the irradiated nuclear graphite to the ultrasound. In some embodiments, the larger the anode basket and volume of electrolyte, the greater the ultrasonic power required to sonoelectrochemically treat the irradiated nuclear graphite and the more ultrasonic transducer cathodes inserted around the anode.

In some embodiments, the use of ultrasonic transducer cathodes enables the device to apply both a sonochemical and electrochemical effect to the irradiated nuclear graphite. In some embodiments, the addition of ultrasound speeds up chemical reactions and optimises the removal of contaminants from the irradiated nuclear graphite. In some embodiments, the application of ultrasound to the electrolyte through the ultrasonic transducers can optimise the size of the contaminants which are subsequently collected on the electrowinning cathodes.

In some embodiments, the use of ultrasonic transduces may prevent the build-up of solids on the electrodes and improve their performance and longevity.

In some embodiments, the ultrasonic transducer/cathode electrode may be a sonotrode configured to apply both axial and radial ultrasonic pulses. In some embodiments, the ultrasonic transducer/cathode electrode may be a ring sonotrode such as, but not limited to a Cascatrode^{™}. In some embodiments, the ring sonotrode may provide axial ultrasonic pulses. In some embodiments, the intensity of the ultrasonic transducer is variable between 0-100%.In some embodiments, the ultrasonic transducers may produce high-intensity bubbles and free radicals through acoustic cavitation. In some embodiments, the ultrasonic frequencies emitted by the ultrasonic transducers may be mostly in the range of 15-25 kHz. In some embodiments, the ultrasonic intensity of the ultrasonic transducers may be up to 4000 W.

In some embodiments, the distance between the ultrasonic transducers and the electrodes depends on the amount of irradiated nuclear graphite to be decontaminated. In some embodiments, the distance between the ultrasonic transducers and the electrodes is optimised for maximum effect and decontamination factors.

In some embodiments, the anode may be an anode basket. In some embodiments, the anode may be the inner surface of a flow reactor. In some embodiments, the anode may be configured to be in contact with the irradiated nuclear graphite by placing irradiated nuclear graphite segments within the anode basket prior to immersion in the electrolyte.

In some embodiments, the irradiated nuclear graphite will be size reduced to expose more of the internal surfaces to facilitate the release of the contamination more effectively.

In some embodiments, the one or more cathodes may be configured to receive the selected contaminants from the electrolyte. In some embodiments, the one or more cathodes may comprise metal, metal oxides, carbon or ceramic material. In some embodiments, the electrowinning cathodes may have various profiles including but not limited to plates, foam, and other 3D porous structures.

In some embodiments, the one or more cathodes may comprise metal, metal oxide, carbon or ceramic. In some embodiments, the one or more cathodes may be a metal or ceramic foam. In some embodiments, porous metal foams such as nickel, copper and titanium may be directly utilised as an efficient cathode with excellent electrocatalytic activity and durability. In some embodiments, the high surface area of the porous metal foam enables the cathode to retain large amounts of contamination, therefore maximising the efficiency of the device.

In some embodiments, the one or more cathodes may be an open cell matrix. In some embodiments, the one or more cathodes may be a 3D printed open cell matrix. In some embodiments, the one or more cathodes may be a 3D printed open cell matrix of metals or ceramics. In some embodiments, the open cell matrix forms an engineered self-supporting structure for use as an electrowinning cathode.

In some embodiments, the high specific surface area of the metal foam and/or open cell matrix structures enables a large capacity for collecting contaminants. In some embodiments, one or more cathodes configured to receive selected contaminants with a high surface area enables shorter deposition times and greater deposition rates compared to non-porous plate electrodes for example. In some embodiments, the electrochemical device has an improved efficiency for purifying an electrolyte, and the longevity of the electrolyte can be maximised whilst minimising the generation of secondary intermediate level waste.

In some embodiments, the one or more cathodes may be hollow. In some embodiments, the one or more cathodes may be hollow such that when submerged in the electrolyte, the electrolyte contacts both the inside and outside of the cathode. In some embodiments, this maximizes the surface area of the cathode in contact with the electrolyte and maximizes the capacity of the cathode for collecting contaminants. Therefore, in some embodiments, the hollow shape of the cathode may increase the efficiency with which the electrochemical device can remove contaminants and purify the electrolyte.

In some embodiments, the one or more cathodes may be coated. In some embodiments, the one or more cathodes may be configured to receive the selected contaminants from the electrolyte by pre-coating the cathodes prior to assembly of the electrochemical device. In some embodiments, the coating may be an anti-fouling coating to minimise blockages of the cathode which would otherwise prevent the cathode from removing contaminants from the electrolyte. In some embodiments, the one or more cathodes may be coated or supplemented with selective materials to enhance the collection and retention of contaminants. In some embodiments, the cathodes may be coated with an ion exchange polymer resin. In some embodiments, the ion exchange polymer resin may attract and remove contamination from the electrolyte. In some embodiments, the one or more cathodes may comprise a bi-polar current collector layer. In some embodiments, the bi-polar current collector layer may receive the selected contaminants from the electrolyte.

In some embodiments, the electrolyte may be an acid or alkali oxidising agent. In some embodiments, the oxidising agent may include, but not be limited to, nitric acid, sulphuric acid, sodium hydroxide, hydrogen peroxide, nitric acid and/or potassium permanganate. In some embodiments, the oxidising agent may be a combination of nitric acid and potassium permanganate, sulphuric acid and potassium permanganate, nitric acid and sulphuric acid and hydrogen peroxide, and/or sodium hydroxide and/or hydrogen peroxide and potassium permanganate. In some embodiments, organic oxidising agents may be used.

In some embodiments, the electrolyte may be a molten salt electrolyte. In some embodiments, the molten salt electrolyte may comprise one or more alkali metal halide salts, alkaline earth metal halide salts, strong bases, or combinations thereof. In some embodiments, the selected contaminant removed from the irradiated nuclear graphite may be graphene and/or a graphene derivative. In some embodiments, the one or more cathodes may be configured to receive graphene and/or graphene derivatives from the electrolyte. In some embodiments, the cathodes may be configured to receive graphene, graphene oxide, reduced graphene oxide, nano-scrolls and/or nano-diamonds from the electrolyte. In some embodiments, the one or more cathodes may be coated in graphene and/or graphene derivatives after operation of the device
In some embodiments, the selected contaminant removed from the irradiated nuclear graphite may be ¹⁴C. In some embodiments, the one or more cathodes may be configured to receive ¹⁴C or stable products thereof such as Ca¹⁴CO₃.

In some embodiments, the one or more cathodes may be replaceable. In some embodiments, after selected contaminants have been electrodeposited onto the one or more cathodes, the cathodes may be removed and loaded directly into intermediate level waste containers and encapsulated with cement grout or a geopolymer for disposal. In some embodiments, after selected contaminants have been electrodeposited onto the one or more cathodes, they may be subsequently used within nuclear and non-nuclear industries. In some embodiments, in which the one or more cathodes comprise a bi-polar current collector layer, after selected contaminants have been electrodeposited onto the bi-polar current collector layer and on one or more cathodes, the cathodes may be removed and subsequently used within nuclear and non-nuclear industries.

In some embodiments, the electrochemical device may further comprise a heater. In some embodiments, the heater may be provided in the walls and/or floor of the device to maintain the electrolyte temperature. In some embodiments in which the electrolyte is a molten salt electrolyte, the heater can be used to maintain the electrolyte in a liquid state.

In some embodiments, the controller may further comprise a power supply and an ultrasonic generator. In some embodiments, the controller may be connected to the ultrasonic cathodes and anode (basket containing graphite), to regulate the field potential and current density along with ultrasonic strength and frequency.

### FIGURES

The present invention will now be described, by way of example only, with reference to the accompanying figures in which:
Figure 1A shows a sonoelectrochemical decontamination cell;
Figure 1B shows the sonoelectrochemical decontamination cell of Figure 1A with electrowinning cathodes;
Figures 2A to 2C illustrate the decontamination process using an acid oxidising agent electrolyte;
Figures 2D to 2F illustrate the decontamination process using an acid oxidising agent electrolyte and pressurised flow cells;
Figures 2G to 2I illustrate the decontamination process using an acid oxidising agent and a single flow cell;
Figure 3 illustrates the decontamination process using an acid or alkali oxidising agent electrolyte and pressurised flow cell/column with collection of decontaminated graphite using a filter/wash and drying process;
Figures 4A to 4F illustrate the collection of contaminants onto electrowinning cathodes using an acid oxidising agent;
Figure 5 illustrates a metal foam electrowinning cathode;
Figures 6A to 6D illustrate various sonoelectrochemical pulse patterns;
Figures 7A to 7E illustrate the decontamination process using an acid oxidising agent and a molten salt electrolyte;
Figures 8A to 8G illustrate the collection of contaminants onto electrowinning cathodes using an acid oxidising agent and a molten salt electrolyte;
Figure 9A shows a 3m³ intermediate level waste box;
Figure 9B and 9C show contaminated bi-polar graphene ultracapacitor or hybrid graphene alpha/beta/gamma battery/ultracapacitor loaded into a 3m³ intermediate level waste box;
Figure 10 shows a 2-stack bi-polar ultracapacitor cell arrangement;
Figure 11A shows a 3m³ intermediate level waste box;
Figure 11B shows stacked bi-polar cells loaded into a 3m³ intermediate level box;
Figure 11C shows a 3m³ intermediate level waste stacked bi-polar hybrid supercapacitor/battery (ultracapacitor);
Figure 12A shows a hybrid graphene alpha/beta/gamma battery and ultracapacitor cell; and
Figure 12B shows a bi-polar hybrid graphene alpha/beta/gamma battery and ultracapacitor arrangement.

### DETAILED DESCRIPTION

According to the present invention there is provided a method and device for sonoelectrochemically decontaminating irradiated nuclear graphite. The method combines electrochemistry with sonochemistry to remove activated contaminants electrochemically and ultrasonically from the irradiated nuclear graphite and reduce contamination levels to low level waste classification.

### Sonoelectrochemical cell

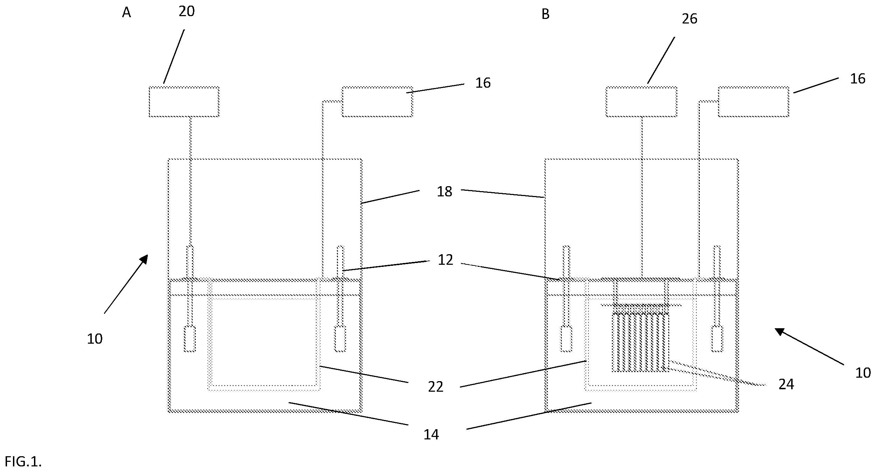

Irradiated nuclear graphite can be decontaminated using a sonoelectrochemical cell **10** as shown in Figure 1.

Ultrasonic electrodes **12** combine electrodes (cathodes) with ultrasonic probe type emitters. As shown in Figure 1, one or more ultrasonic electrodes **12** are immersed directly into the electrolyte **14** and positioned around an anode basket **22.** The anode basket **22** is configured to hold the irradiated graphite segments (not shown) such that the graphite is immersed in the electrolyte **14.** The ultrasonic electrodes **12** deliver ultrasound to the irradiated nuclear graphite segments within the anode basket **22** through the electrolyte **14.** Ultrasonic frequencies are mostly in the range of 15-25 kHz, whilst ultrasonic power can reach up to 4000 W. The one or more ultrasonic electrodes **12** are attached to an ultrasonic controller **20** which comprises a power supply and an ultrasonic generator. An additional controller **16** is attached to the anode basket **22.** The controller may regulate the field potential and current density along with ultrasonic strength and frequency.

The electrolyte **14** may be a molten salt electrolyte or may be an acid oxidising agent electrolyte. A molten salt electrolyte may comprise one or more alkali metal halide salts, alkaline earth metal halide salts, strong bases, or combinations thereof. For example, the molten salt electrolyte may be a LiCl/CaCl₂ electrolyte. The electrolyte may also comprise KCI. Additives such as CaCO₃ and CO₂ or CaCO₃ may also be added to the electrolyte **14.**

The sonoelectrochemical cell **10** is provided within a containment **18.** The containment **18** may comprise air or may be sealed and maintain an inert atmosphere such as argon. When the electrolyte **14** is a molten salt electrolyte, an inert argon atmosphere prevents oxidisation of the molten salt. When the electrolyte **14** is a molten salt electrolyte, the sonoelectrochemical cell **10** may incorporate heaters (not shown) in the walls and floor to maintain the molten salt electrolyte in a liquid state at the required temperature.

As shown in Figure 1B, after removal of contaminants from the irradiated nuclear graphite into the electrolyte **14,** the anode basket **18** may be emptied and placed back into the electrolyte **14.** The electrowinning cathodes **24** may then be placed in the sonoelectrochemical cell **10** and immersed in the electrolyte **14.** The positioning of the ultrasonic electrodes **12** around the anode basket **22** is such that ultrasonic streaming of contaminants towards the electrowinning cathodes **24** is promoted. During the electrowinning cycle, the ultrasonic transducers may be operating at low power, or may be in an 'off' state in which no ultrasound is applied to the electrolyte. This ensures contaminants are streamed towards the electrowinning cathode **24** but prevents contaminants from being removed from the electrowinning cathodes **24** or hindering the attachment of contaminants to the electrodes.

The electrowinning cathodes **24** are connected to a cathode controller **26.** The cathode controller **26** applies a current to the electrowinning cathodes **24** such that an electrolytic cell is formed with the electrolyte **14** and the anode basket **22.** Upon application of current, positive ion contaminants in the electrolyte **14** are collected on the electrowinning cathodes **24.** The electrowinning cathodes **24** may comprise a bi-polar current collector layer (not shown). The bi-polar current collector layer may be any suitable conductive material such as, but not limited to, SS316, copper or aluminium. Upon application of current, positive ion contaminants in the electrolyte **14** may be collected onto the current collector layer of the electrowinning cathodes **24.**

Contaminants may also be removed from the anode basket **22** and deposited on the electrowinning cathodes **24.** Subsequently, the contaminant coated electrowinning cathodes **24** can be loaded into intermediate level waste boxes for storage at the geological disposal facility.

### Graphene oxide synthesis in acid oxidising agent electrolyte

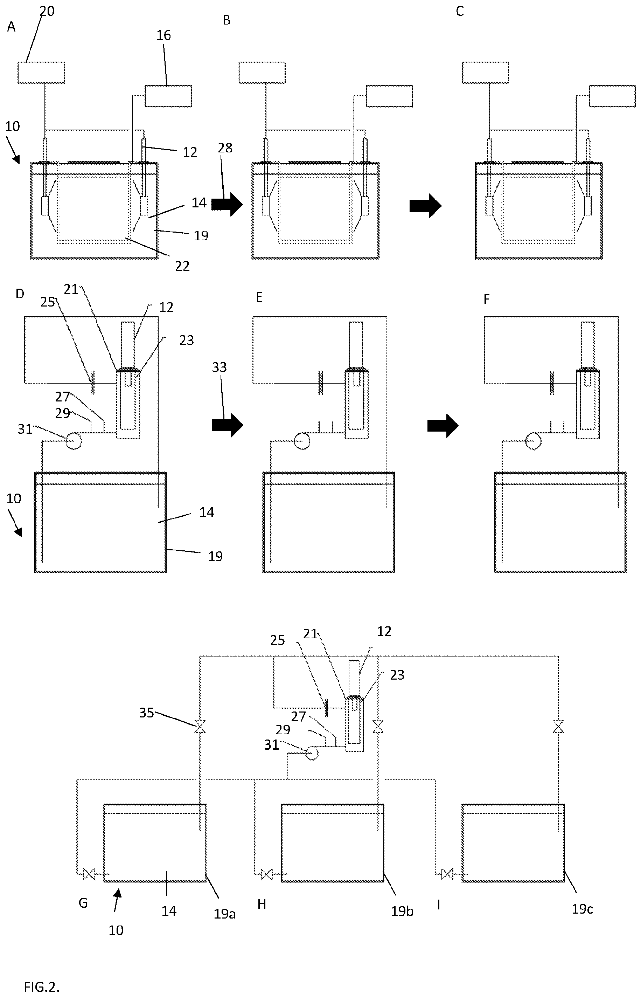

Figure 2 shows a sonoelectrochemical cell **10** with an electrolyte **14** which is an acid or alkali oxidising agent electrolyte. An acid or alkali oxidising agent electrolyte may comprise oxidising agents such as sulphuric acid (H₂SO₄), potassium permanganate (KMnO₄), or sodium hydroxide (NaOH) and hydrogen peroxide (H₂O₂).

During the decontamination process, the anode basket **22** may be transferred between multiple tanks **19** as indicated by the arrows **28** in Figure 2. A first tank **19** illustrated by Figure 2A may contain an electrolyte **14** comprising 98% sulphuric acid. After a sonoelectrochemical decontamination cycle, the anode basket **22** containing the irradiated nuclear graphite may be removed from the tank **19** of Figure 2A and transferred to the tank **19** of Figure 2B.

Sonoelectrochemical treatment of the irradiated nuclear graphite may result in the synthesis of graphene oxide through Graphite Intercalation Compounds (GICs). GICs are formed by the insertion of atomic or molecular layers of a guest chemical between layers in graphite material. Graphite intercalation compounds (GICs) are complex materials having a formula CXm where the ion Xn+ or Xn- is inserted (intercalated) between the oppositely charged carbon layers. Pristine graphite oxide (PGO) is formed.

After the sonoelectrochemical decontamination cycle, the anode basket **22** containing the irradiated nuclear graphite may be removed from the tank **19** of Figure 2B and transferred to the tank **19** of Figure 2C, which comprises a water electrolyte. The formation of GICs between the graphite layers expands the interlayer distance and weakens the bonds which exfoliates layers and exposes the porous structure of the graphite. Sonoelectrochemical treatment in water converts the PGO into graphene oxide (GO) which involves hydrolysis of covalent sulphates and loss of all interlayer registry and associated contamination. This step further enhances the decontamination factor. The graphene oxide in water can be collected onto electrowinning cathodes **24.** Alternatively, a further sonoelectrochemical decontamination process converts the graphene oxide in suspension to graphene forming a water/graphene suspension electrolyte. The graphene can then be collected onto electrowinning cathodes **24.**

The sonoelectrochemical process enhances the GIC process by removing the layers of PGO from the irradiated nuclear graphite into the electrolyte, and by exposing graphite pores to a greater degree to enhance penetration and removal of contamination within the pores. The exposed pores of the oxide graphene layer increase the release of contaminants such as ¹⁴C.

Alternatively, graphene oxide may be synthesised by water electrolytic oxidation. Concentrated sulphuric acid (98wt.%) is used to functionalize the irradiated nuclear graphite and add functional groups between the layers of graphite. Water electrolytic oxidation of the graphite intercalation concentrate (GIC) follows in 50 wt.% sulphuric acid and potassium permanganate to produce manganese heptoxide Mn₂O₇ and highly reactive radicals which facilitate removal of contamination. The sonoelectrochemical process further enhances the oxidation process and subsequent removal of contamination. Subsequently, the graphite is sonicated in water to produce an aqueous solution of electrochemical graphene oxide (EGO).

Aqueous GO can interact with contaminants in the acid oxidising agent electrolyte to facilitate their removal. Cation/GO coagulation occurs with the formation of nanoparticle aggregates of GO sheets. Aqueous GO interacts with actinides including Am(iii), Th(iv), Pu(iv), Np(v), U(vi) and typical fission products Cs(i), Sr(ii), Eu(iii) and Tc(vii). GO along with the various activated contaminants may be collected and retained from the aqueous oxidising agent electrolyte on electrowinning cathodes **24** or removed by filtration and other means.

Graphene oxide can be converted to reduced graphene oxide (rGO) by chemical reduction using ascorbic acid as the reducing agent. Reduced graphene oxide can be synthesized from graphene oxide utilizing the sonoelectrochemical decontamination process in molten salts or acid oxidising agents using various acid and water ultrasonic processes.

Reduced graphene oxide has a higher electrical conductivity, electrochemical capacitance and cycling capability than graphene oxide, therefore enhancing the performance of batteries, supercapacitors, and superconductors. Reduced graphene oxide also has unique properties for components within fuel cells and other applications.

As shown in Figures 2D, 2E and 2F, the sonoelectrochemical decontamination process may utilise a series of open top tanks **19** containing the electrolyte **14,** and the ultrasonic electrodes **12** and anode **23** may be located externally to the tank **19,** in pressurised flow cells **21** or columns.

The orifice or pressure sustaining valve **25** subjects the electrolyte **14** to a pressure between 0 and 5 bar.

As shown in Figure 2D, the system also comprises a temperature sensor **27,** a pressure sensor **29** and a pump **31.** The oxidising agent electrolyte is pumped through the flow cell **21** between the surfaces of the ultrasonic electrode **12** (which is a sonotrode combining a cathode and an ultrasonic probe type emitter), and the inner wall of the flow cell anode **23.** Furthermore, the open top tank **19** may be used subsequently in the electrowinning process as indicated by arrows **33,** and the recirculation of the oxidising agent electrolyte into the tank **19** removes decontamination from the pressurised flow cell **21** and provides a fresh supply of fluid to continue and enhance decontamination. Although not shown in Figures 2D to 2I, the tank **19** may be provided with an anode basket **22** which can act as a filter and prevents graphite particles passing through the filter and collecting on the electrowinning cathodes **24** once they are inserted into the tank **19,** thus minimising graphite weight loss.

Figures 2G, 2H and 2I show a similar arrangement to Figures 2D, 2E and 2F, with a single pressurised flow cell **21** and valves **35** to enable processing of the oxidising agents in tanks **19a, 19b** and **19c** through the flow cell **21** in sequence.

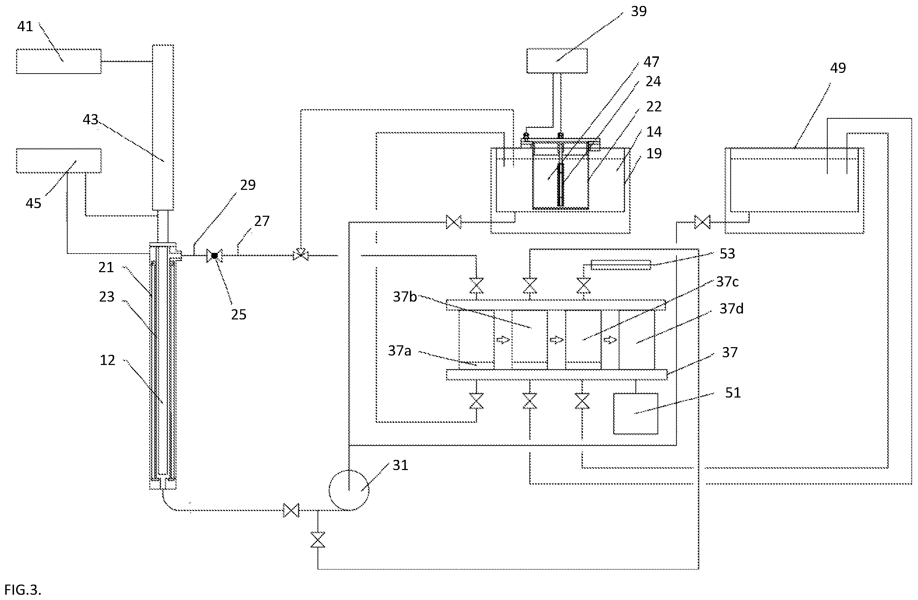

Figure 3 shows the sonoelectrochemical flow cell/column setup shown in Figures 2D, 2E and 2F in more detail. The system comprises an orifice plate or pressure sustaining valve **25,** a temperature sensor **27,** a pressure sensor **29,** a pump **31,** an electrowinning power generator **39,** an ultrasonic power and pulse generator **41,** an ultrasonic transducer **43,** and an electrochemical power and pulse generator **45.** The oxidising agent electrolyte is pressurised in the sonoelectrochemical flow cell **21** or column, which enhances decontamination of the graphite. As the graphite is decontaminated, graphite particles are suspended in the circulating electrolyte **14.** The suspended graphite particles are recirculated through the flow cell **21.** The anode basket **22** in the tank **19** prevents graphite particles passing through and collecting on the electrowinning cathodes **24.** The electrolyte within the anode basket **22** is therefore a filtered electrolyte **47.**

Once the graphite is decontaminated, it is filtered, washed and dried. This is illustrated in Figure 3 by the multi-port filter/wash/drier **37.** The multi-port filter/wash/drier **37** may be manually operated, or may operate continuously.

In a first step, the graphite is filtered by the graphite filter portion **37a,** followed by washing of the graphite in a subsequent step in the graphite wash section **37b.** The wash cycle may include carbonates or bicarbonates, such as calcium carbonate, fed into the multi-port filter/wash/drier **37** via wash tank **49.** The wash cycle captures residual ¹⁴C to form Ca¹⁴CO₃. Subsequently, the graphite is dried in the graphite drier section **37c,** which is fed with heated nitrogen via valve **53.** The graphite is then discharged from the multi-port filter/wash/drier **37** via the discharge section **37d** into a dry graphite container **51.** Alternatively, a centrifuge may be used to wash and dry the graphite. Multiple sonoelectrochemical flow cell/columns may be used to increase decontamination residence time and throughput.

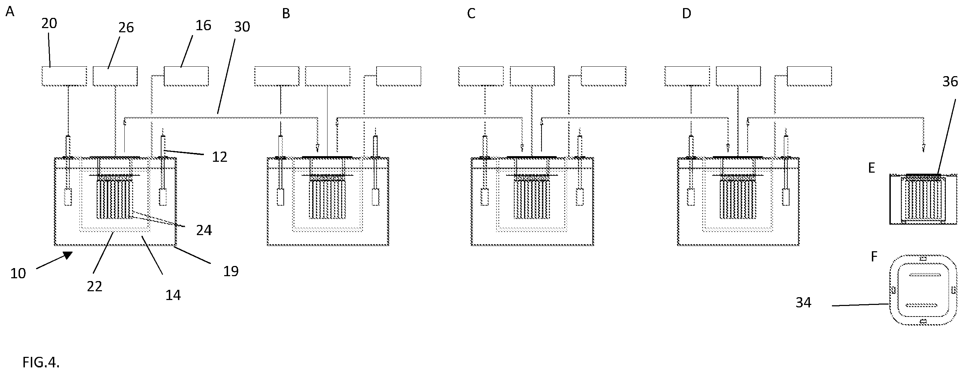

As illustrated by Figure 4, the electrowinning cathodes **24** can be inserted into each of the tanks **19** shown in Figure 2. This is indicated by the arrows **30** in Figure 4. If the anode basket **22** is comprised within the tank **19** (as shown in Figures 2A to C), the anode basket **22** containing the irradiated nuclear graphite is removed from the tank **19** prior to the insertion of the electrowinning cathodes **24.** Figure 4A shows electrowinning cathodes **24** immersed in a 98% sulphuric acid electrolyte. Figure 4B shows electrowinning cathodes **24** immersed in a 50% sulphuric acid/potassium permanganate electrolyte. Figure 4C shows electrowinning cathodes immersed in a water electrolyte comprising a graphene oxide suspension. Figure 4D shows the electrowinning cathodes immersed in a water electrolyte after further sonoelectrochemical treatment has converted the graphene oxide to graphene. At each stage, the electrowinning cathodes remove graphene, graphene derivatives, ¹⁴C, activated metals, lanthanides and actinides from the electrolyte.

The electrowinning cathodes **24** may be an open cell matrix of metals or ceramics. The electrowinning cathodes **24** may comprise of ceramic or metal foam anodes and cathodes.

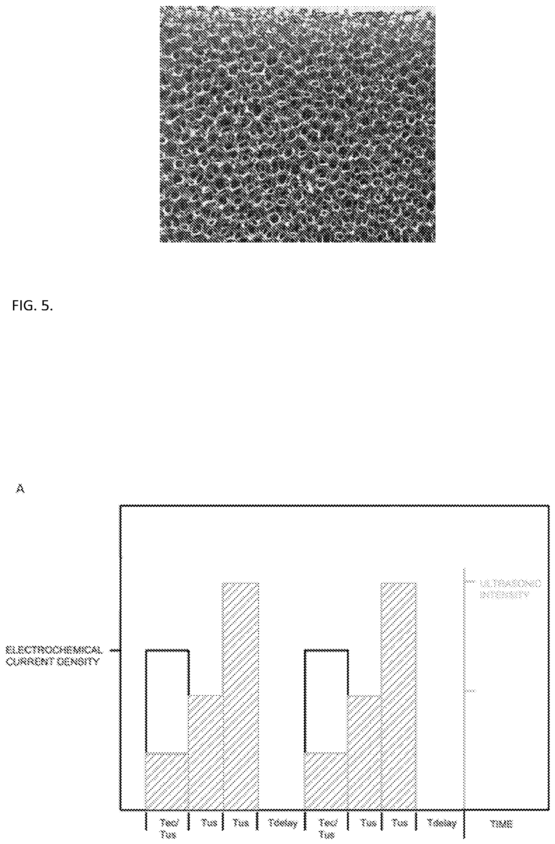

The electrowinning cathodes **24** may be 3D printed. The electrowinning cathodes **24** may be metal or ceramic foams with a 3D interconnected porous structure as shown in Figure 5. The surface of the foam is very uneven, making the true surface area of the already porous foam even larger. Porosity of the foam is typically around 90% and the pore size may vary from 1 to 0.1 mm depending on the metal or ceramic used, however other porosity and pour sizes may be used. The metal foam electrowinning cathodes may be, but are not limited to, nickel, copper or titanium.

Coatings may be applied to the ceramic or metal foams to enhance the energy density and ion transfer properties for battery and ultracapacitor applications. These coatings may comprise nickel niobates, boron nitride, titanium niobium oxides and nickel manganese cobalt amongst others. The electrowinning cathodes **24** may comprise current collectors which may also collect the graphene, graphene derivatives, ¹⁴C, activated metals, lanthanides and actinides from the electrolyte.

### Ultrasound and acoustic cavitation

Ultrasonic electrodes **12** enhance the electrochemical processes within the sonoelectrochemical cell **10** by introducing the process of acoustic cavitation. As the ultrasonic electrodes **12** first apply ultrasound to the electrolyte **14,** bubbles with a relatively small radius form and then grow with successive ultrasound cycles. After reaching a certain size, a bubble will become unstable, and subsequently violently collapse. The collapsing bubble event is a microscopic implosion that generates high local turbulence and thermal energy. Upon the collapse of the bubble, high temperatures, pressures, and cooling rates can be achieved, which permit access to a range of chemical reaction space normally not accessible. The collapsing bubble can generate a high temperature up to 5000°C and high pressure up to 2000 atm. The implosion of the cavitation bubble also results in liquid jets of up to 280 m/s velocity. Ultrasound enhances the electrochemical decontamination process in several ways. Firstly, the application of ultrasound to the electrolyte **14** results in acoustic streaming. Acoustic streaming is directly proportional to the intensity of the ultrasound, the surface area of the ultrasonic emitting device and the attenuation coefficient of the medium. It is inversely proportional to the bulk solution viscosity and the speed of sound. The effect of acoustic streaming caused by ultrasound is an enhanced movement of the electrolyte **14,** reducing the diffusion boundary layer and promotion of the mass transfer of electroactive species to the electrode surface.

Secondly, the application of ultrasound to the electrolyte **14** causes the movement of the acoustic cavitation bubble and results in turbulent flow. The turbulent flow increases the mass transport processes within the electrolyte **14** and at the electrode surface.

Thirdly, the application of ultrasound to the electrolyte **14** causes microjets and microstreaming. The collapsing of the acoustic bubbles on a solid surface leads to the formation of microjets being directed towards the surface of the solid material at speeds of up to 280 m/s. When a cavitation bubble bursts on the surface and inside the pores of the irradiated nuclear graphite substrate, contaminants are dislodged and mass transfer rates are enhanced. Microjets and microstreaming also have a surface cleaning effect which prevents fouling of the electrode surface (and accumulation of gas bubbles at the electrode surface) and ultimately enhances the electrodeposition process.

Additionally, the application of ultrasound to the electrolyte **14** causes shock waves which are produced at the end of the strong collapse of bubbles. The shock waves cause the erosion of the electrode surface leading to an increase in the current.

Lastly, the application of ultrasound to the electrolyte **14** enhances the chemistry of the electrolyte. Acoustic cavitation leads to the production of highly reactive radicals such as OH, H₂O₂ and O. The radicals act as strong oxidants to oxidise contaminants such as ¹⁴C. The creation of free radicals by ultrasonic cavitation may be the main mechanism that leads to chemical degradation of target contamination.

### Continuous vs pulsed cycles

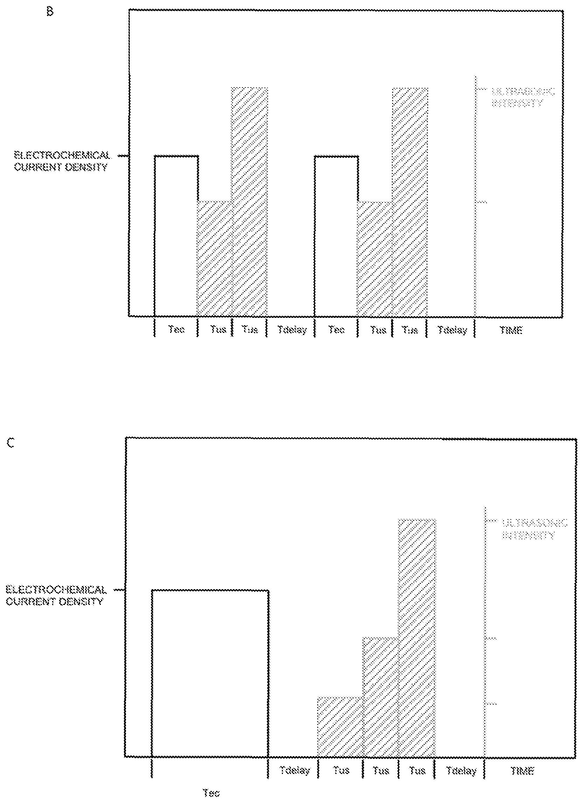

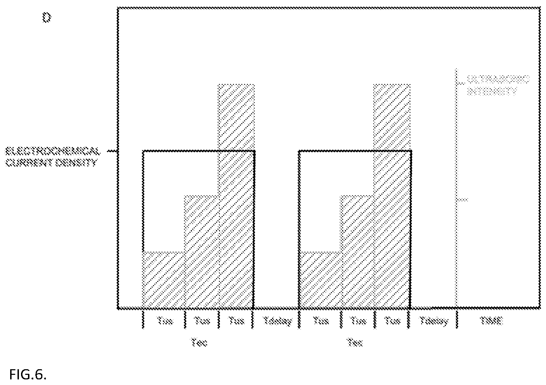

Ultrasound may be applied to the electrolyte **14** via ultrasonic electrodes **12** continuously or may be applied in pulses. Ultrasonic and current pulses may be alternated to optimise the removal of contaminants from the sub-surface and pores of the irradiated nuclear graphite and to minimise graphite weight loss. Various distributions of ultrasound and current pulses may be applied, with some examples shown in Figure 6, although other variations are possible. Compared to the application of direct current alone, sonoelectrochemistry is more effective at removing contaminants, whilst pulsed current and ultrasound can be more effective at removing contaminants than continuous application. A greater current density can result in an increased mass transport of species, and therefore a more efficient decontamination process.

As can be seen in Figure 6A, the electrochemical and ultrasonic pulses may partially overlap, as indicated by the Tec/Tus time plot in which electrochemical current and ultrasound are applied simultaneously. The electrochemical current may then be in an 'off' state whilst the ultrasonic pulses are applied with a stepped increase in intensity, as shown by the two subsequent Tus time plots. There is a relaxation pause after application of the ultrasound pulses, before the next application of electrochemical current, illustrated by the Tdelay time.

As shown in Figure 6B, the electrochemical and ultrasonic pulses may be applied alternately, without overlapping. This is illustrated by the Tec time plot in which electrochemical current is applied before entering an 'off' state as the two subsequent ultrasonic pulses are applied with a stepped increase in intensity, illustrated by the Tus time plots. There is a relaxation pause after application of the ultrasound pulse, before the next application of electrochemical current, illustrated by the Tdelay time.

Figure 6C also shows the electrochemical and ultrasonic pulses applied alternately, without overlapping, with an additional relaxation pause between the application of electrochemical current and ultrasound. In this example, an electrochemical pulse represented by the Tec time plot, is followed by a relaxation time delay between pulses, as shown by the first Tdelay time plot. An ultrasonic pulse is then applied, with a stepwise increase in ultrasonic intensity shown in the Tus plots. The ultrasound pulses are followed by a relaxation pause, before the next application of electrochemical current, as shown by the second Tdelay time plot.

Referring to Figure 6D, the electrochemical and ultrasonic pulses may overlap entirely as illustrated by the simultaneous application of the electrochemical pulse, Tec, and the stepped intensity ultrasonic pulses, Tus. Each overlapping pulse may be followed by a relaxation time delay, as shown by the Tdelay time plot, before a subsequent overlapping Tec/Tus electrochemical/ultrasonic pulse is applied.

### Effects of pulsed ultrasonic cavitation in the development of nano-diamonds

When the sonoelectrochemical cell **10** comprises an acid oxidising agent electrolyte and ultrasound is applied in pulses, the process of forming graphene oxide described in Figure 2 above may further lead to the formation of nano-scrolls and nano-diamonds whilst decontaminating irradiated nuclear graphite.

Nano-diamonds can be efficiently prepared from graphite without the use of high temperatures or pressures by a multi-step procedure based on ultrasonication-induced cavitation. First, graphene oxide is formed as outlined in Figure 2. Ultrasonication of GO induces cavitation whilst a specific metal oxide such as Manganese Heptoxide Mn₂O₇ is inserted between the graphite layers as a spacer material which significantly affects the nucleation and growth of nano-diamond particles. Carbon nanomaterials, metal oxides, noble metal nanocrystals, polymers, metal-organic frameworks, and even water molecules can also be used as spacer materials. Specifically, cavitation is caused by alternating high- and low-pressure cycles initiated by the propagation of ultrasound waves. During the low-pressure cycle, these waves induced the formation of microscopic voids or bubbles in the medium that reached a certain volume and collapsed during the high-pressure cycle, which created large local increases of temperature (~5000 K) and pressure (~2000 atm) under the action of shear forces. All of these factors resulted in the modification and cleavage of GO sheets and impacted their chemistry and morphology to afford reduced GO sheets.

The shear forces involved in the acoustic cavitation can induce scrolling of the graphene sheets to produce graphene nanoscrolls. The Mn₂O₇ spacer is unstable and has a tendency to decompose with the release of oxygen. This primarily occurs at the tips and on the side walls of tubular graphene nanoscrolls and results in nano-diamond nucleation through the formation of diamond nuclei at subsurface damage sites as Mn₂O₇ decomposes.

Subsequently, damaged graphene nanoscrolls having vacancy defects can experience self-healing, which results in the formation of basic nano-diamond seeds in which carbon atoms attach to dangling bonds.

Finally, the gradual growth and warping up of these nuclei to cluster-shapes regarded as nano-diamond seeds affords crystalline diamond particles. The introduction of metal oxides to irradiated nuclear graphite during the sonoelectrochemical decontamination process enhances the properties of the graphene oxide in battery applications amongst others.

### Graphene synthesis in molten salt electrolyte

The sonoelectrochemical cell **10** shown in Figure 1 may be used to form graphene when comprising a molten salt electrolyte during the process of sonoelectrochemically decontaminating irradiated nuclear graphite as described herein. Compared to traditional chemical methods of synthesising graphene, using a sonoelectrochemical cell **10** and a molten salt electrolyte can reduce the number of defects in the graphene structure. By using LiCl, NaCl, KCl and LiBr electrolytes, nanotubes can be produced.

Graphene can be synthesised from irradiated nuclear graphite via electrolytic exfoliation through lithium ions intercalation, expansion, and ultrasonic cavitation. At the initial stage of electrolysis, the lithium ions from the molten LiOH electrolyte heated to 600°C, are intercalated into the spaces between the graphene layers where they are in situ reduced to form intercalation compounds (LiₓC_{y}) and exert mechanical stress on the host lattice of graphite. As the abundant LiₓC_{y} are introduced, the interlayer spacing of the graphene layers expands gradually. The intercalated alkali metal destabilizes the layered graphite structure and instigates the formation of carbon-based nanostructured species.

This leads to separation of the graphite structure such that individual graphene layers or stacks become detached. The graphite and electrolyte is subjected to ultrasonic cavitation wherein micro explosions and reactions occur in the interlayer space of graphene layers or stacks leading to further exfoliation.

An alternative means of exfoliation is when the graphite is immersed in water and subjected to ultrasound cavitation wherein micro explosion reactions between lithium (and LiₓC_{y}) and water occurs in the interlayer space of graphene layers or stacks and instantly releases hydrogen. These gaseous products lead to the graphene stacks being further exfoliated.

Compared to commercial graphite, graphene formed from graphite in molten salt media has a higher electrical conductivity. The increase in the conductivity is due to the advantages of the molten salt method, which enables the production of graphene with high crystallinity and purity. The electrical conductivity of graphene synthesised from graphite via molten salt method at 600°C is 10 times higher than commercial grade graphene and 6 times greater than reduced graphene oxide. This has significant implications for enhancing the performance of batteries and/or other applications.

Graphene is also effective at capturing contaminants and therefore decontaminating the electrolyte 14 after being exfoliated from the irradiated nuclear graphite. The contamination along with graphene layers may be removed from the molten salt electrolyte and collected on cathodes using the electrowinning process illustrated by Figure 1B.

### Graphene overlayed onto graphene oxide electrowinning cathode formation using acid oxidising agents and molten salts

The sonoelectrochemical decontamination process may also be used to overlay graphene onto graphene oxide on electrowinning cathodes **24.** The electrowinning cathodes **24** may comprise a bi-polar current collector layer, and the sonoelectrochemical decontamination process may be used to overlay graphene onto graphene oxide and/or reduced graphene oxide on the bi-polar current collector layer. Compared to commercial graphene and graphene oxide, graphene overlayed onto graphene oxide can have enhanced electrical properties. This is beneficial when using electrowinning cathodes **24** in energy storage devices in nuclear and non-nuclear applications.

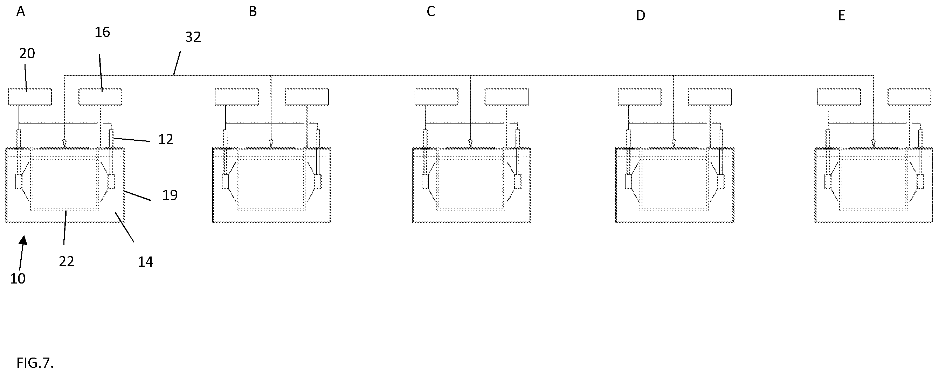

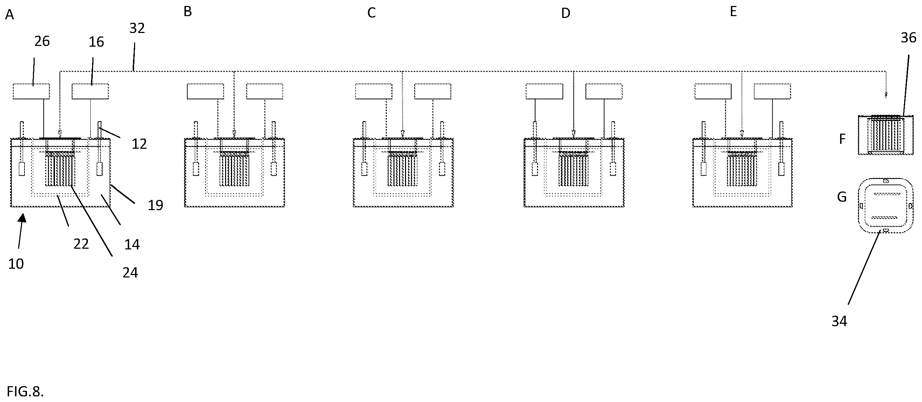

The process of overlaying graphene onto graphene oxide on electrowinning cathodes **24** is shown in Figures 7 and 8. Figures 7A to 7C show the anode basket **22** containing the irradiated nuclear graphite being transferred between multiple tanks **19** comprising various oxidising agent electrolytes. This is indicated by the arrows **32** in Figure 7. A first tank **19** illustrated by Figure 7A contains an electrolyte **14** comprising 98% sulphuric acid. After a sonoelectrochemical decontamination cycle, the anode basket **22** containing the irradiated nuclear graphite is removed from the tank **19** of Figure 7A and transferred to the tank **19** of Figure 7B. The tank **19** of Figure 7B contains a 50% sulphuric acid/potassium permanganate electrolyte.

Sonoelectrochemical treatment of the irradiated nuclear graphite in sulphuric acid and potassium permanganate results in the synthesis of pristine graphene oxide (PGO) through Graphite Intercalation Compounds (GICs).

After the sonoelectrochemical decontamination cycle, the anode basket **22** containing the irradiated nuclear graphite may be removed from the tank **19** of Figure 7B and transferred to the tank **19** of Figure 7C which comprises a water electrolyte. The formation of GICs between the graphite layers expands the interlayer distance and weakens the bonds which exfoliates layers and exposes the porous structure of the graphite. Sonoelectrochemical treatment in water converts the PGO into graphene oxide (GO) which involves hydrolysis of covalent sulphates and loss of all interlayer registry and associated contamination. This step further enhances the decontamination factor.

Subsequently the anode basket **22** containing the irradiated nuclear graphite is immersed in a tank **19** as shown in Figure 7D which comprises a molten salt LiOH electrolyte. After sonoelectrochemical treatment in the molten salt electrolyte, the anode basket **22** is removed from the cell. Finally the anode basket **22** containing the irradiated nuclear graphite is immersed in a tank **19** comprising a water electrolyte, forming a graphene/water suspension.

As illustrated by Figure 8, electrowinning cathodes **24** can be inserted into each of the tanks **19** shown in Figure 7 after the anode basket **22** containing the irradiated nuclear graphite has been removed. This is indicated by the arrows **32** in Figure 8. A bi-polar current collector layer may have been physically attached or chemically bonded to the electrowinning cathode **24** prior to the insertion in the tank **19.** Figure 8A shows electrowinning cathodes **24** immersed in a 98% sulphuric acid electrolyte. Figure 8B shows electrowinning cathodes **24** immersed in a 50% sulphuric acid/potassium permanganate electrolyte. Contaminants are removed from the electrolyte **14** onto the electrowinning cathodes **24.** Figure 8C shows electrowinning cathodes **24** immersed in the water electrolyte and removal of graphene oxide onto the electrowinning cathodes **24.** Figure 8D illustrates the electrowinning cathodes immersed in a molten salt electrolyte and the removal of graphene onto the electrowinning cathodes **24.** Similarly, Figure 8E illustrates the electrowinning cathodes **24** immersed in the water electrolyte of Figure 7E and the collection of graphene onto the electrowinning cathodes **24.** By inserting the electrowinning cathodes **24** into multiple tanks **19** comprising acid oxidising electrolytes and subsequently a molten salt electrolyte, electrowinning cathodes **24** coated in graphene oxide and overlayed with graphene can be formed. The graphene oxide or reduced graphene oxide overlayed with graphene may coat the bi-polar current collector layer of the electrowinning cathodes **24.** Graphene overlayed onto graphene oxide (or reduced graphene) provides up to 10 times the electrical conductivity of commercial grade graphene, and by extension superior performance of energy storage systems.

### Development of Graphene Metal Oxide Solid State Batteries and Solid State Batteries and Hybrid Supercapacitor-Batteries (Ultracapacitors)

After collection of contaminants, electrowinning cathodes **24** may be removed from the sonoelectrochemical cell **10,** rinsed, dried, and loaded into intermediate level waste (ILW) containers **34** as shown in Figures 4F, 8G, 9A and 9B. Electrowinning cathodes **24** from graphite that has been decontaminated to low level waste classification may be loaded into LLW half height ISO (HHISO) containers. The electrowinning cathode loaded containers can be processed and disposed of at a licensed low level waste burial facility. Graphite classified as very low level waste (VLLW) or out of scope waste may be disposed of at permitted landfill sites or potentially reused in various applications.

Alternatively, the high electrical conductivity, large specific surface area, high-speed electron/heat mobility, and electrocatalytic properties of electrowinning cathodes **24** which have been coated with contaminants and/or graphene and/or graphene derivatives means they can be utilised to form solid state batteries and anode free solid state and hybrid supercapacitor-batteries **36** as shown in Figures 4E, 8F and 9C. Electrowinning cathodes **24** for use in solid state batteries can be produced using the sonoelectrochemical decontamination process described herein in either an acid oxidising agent or molten salt electrolyte. Alternatively or additionally, the solid state energy storage device may utilise graphene overlayed onto graphene oxide electrowinning cathodes **24.** This may be achieved by acid oxidising agents or molten salts. The electrowinning cathodes **24** for use in solid state batteries may include a bi-polar current collector layer which may have been coated in contaminants and/or graphene and/or graphene derivatives.

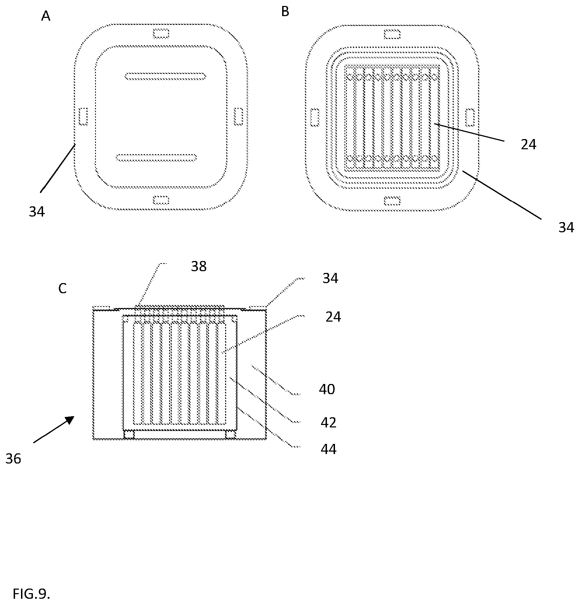

As shown in Figure 9C, the electrodeposited electrowinning cathodes **24** can be used to convert ILW 3m³ boxes **34** and LLW containers into solid state batteries (SSB) and anode free solid state batteries (AFSSB) and hybrid supercapacitor-battery **36** and battery energy storage systems (BESS) for ILW and LLW storage facilities. These can be used to provide power for the national grid and local residents. The electrodeposited electrowinning cathodes **24** may be incorporated within other battery types and architectures. Unlike conventional Li-ion batteries, solid state batteries are non-flammable and are considered to be intrinsically safe.

Metal foam and ceramic electrowinning cathodes **24,** optionally comprising contaminant and/or graphene, and or graphene derivative coated bi-polar current collectors, may be used as anodes and cathodes, can be combined with anode/cathode post insulators **38,** geopolymer encapsulant **40,** and solid state conducting polymer **42,** and a battery casing / box liner **44** to form solid state and hybrid supercapacitor-batteries, as shown in Figure 9C. The resultant battery comprises state of the art solid state materials, which has a much greater current density and faster charging capability than lithium-ion batteries. High concentration electroltyes incorporating lithium, sodium, magnesium and other elements may be used to increase voltage and power density thresholds.

The electrowinning cathodes **24,** optionally comprising contaminant and/or graphene derivative coated bi-polar current collectors, may be combined with a non-flammable electrolyte to form hybrid battery/capacitors. The electrolyte may comprise fire retardant additives such as, but not limited to: fluroethylene carbonate (FEC), trimethyl phosphate (TMP) and/or adiponitrile (AN). The electrolyte may comprise non-flammable polymers such as, but not limited to: polyacrylonitrile/poly(vinyl alcohol) (PAN)/(PVA) (20:80), poly (acrylic anyhdride-2-methyl-acrylic acid-2-oxirane-ethyl estermethyl methacrylate) (PAMM) and/or poly(*ε*-caprolactone) /succinonitrile (PCL/SN) with PAN skeleton.

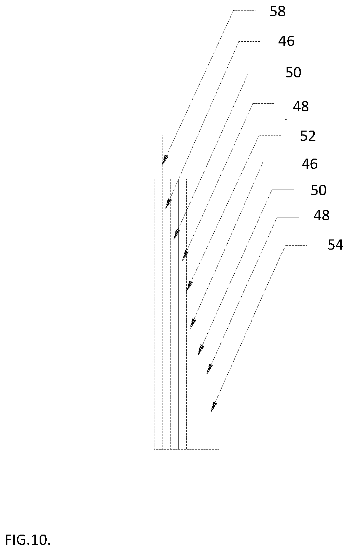

As shown in Figure 10, the electrowinning cathodes **24** optionally comprising a bi-polar current collector can be used to form a 2 stack bi-polar cell arrangement. The bi-polar cell arrangement comprises electrowinning cathodes **24** used as anodes **46** and cathodes **48** with a solid state electrolyte **50** sandwiched between the electrodes. The solid state electrolyte **50** may be a non-flammable electrolyte and/or may comprise fire-retardant additives. A bi-polar current collector layer **52,** which has been coated in contaminants and/or graphene and/or graphene derivatives, is situated in the middle of the 2 stack bi-polar cell arrangement. An anode/cathode current collector **58** and back plate **54** form the two ends of the 2 stack arrangement.

Although a two stack bi-polar cell arrangement is shown in Figure 10, the electrowinning cathodes **24,** optionally comprising a bi-polar current collector, may be used to form multiple stacked bi-polar assemblies for use in a hybrid battery/supercapacitor (ultracapacitor). A multiple stacked bi-polar assembly may comprise greater than two bi-polar current collectors along with anodes **46** and cathodes **48** arranged in series.

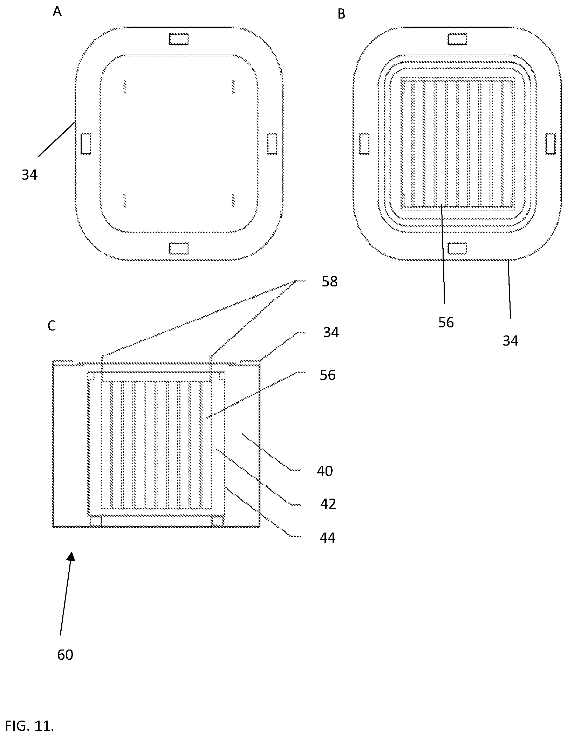

Figure 11 shows an arrangement in which bi-polar cells **56** are stacked within a 3m³ intermediate level box **34** to form a stacked bi-polar hybrid supercapacitor/battery (ultracapacitor) **60.** The stacked bi-polar hybrid supercapacitor-battery **60** can be used at ILW and LLW storage facilities to provide power for the national grid and local residents.

As shown in Figure 11C, the stacked bi-polar hybrid supercapacitor/battery (ultracapacitor) **60** comprises stacked bi-polar cells **56,** which comprise the electrowinning cathodes **24** and optionally comprise contaminant and/or graphene, and or graphene derivative coated bi-polar current collectors. The stacked bi-polar cells **56** may be combined with anode/cathode current collectors **58,** resulting in a simpler anode/cathode connection when compared to the arrangement shown in Figure 9C. The stacked bi-polar hybrid supercapacitor/battery **60** further comprises geopolymer encapsulant **40,** solid state conducting polymer **42,** and a battery casing/box liner **44.** The resultant battery comprises state of the art solid state materials, which has a much greater current density and faster charging capability than lithium-ion batteries.

There are various materials and hybrids available for current collectors in solid state and anode free solid state batteries. Anode-free lithium cell architecture presents remarkable advantages in terms of both energy density and safety compared with conventional lithium-ion cells. Nanostructured graphene and graphene oxide based hybrids may be used as anodes for solid state batteries and hybrid supercapacitor-batteries.

Anode materials for rechargeable batteries can be classified in three main groups depending on the mechanism of lithiation:
(i) Alloying materials such as Si, Ge, Sn, Al, Bi, etc.,
(ii) Conversion materials like transition-metal oxides (MnxOy, NiO, FexOy, CuO, Cu2O, MoO2, etc.), metal sulfides, metal phosphides, and metal nitrides
(iii) Insertion materials, such as carbonaceous compounds (graphite, porous carbon, carbon nanotubes, graphene derivatives), TiO2, Li4Ti5O12, etc.

Nickel niobate (NiNb2O6) has been examined in an "open and regular" crystalline form for use as the anode in a lithium ion battery. It forms a porous, nano-scale structure that eliminates the dendrite formation that can cause short circuits and other problems. The material offers energy density of 244 mAh g-1 and retains 80%+ of its capacity across 20,000 cycles. This demonstrates promising energy storage performance of nickel niobate anodes in practical battery devices. Cubic or hexagonal boron nitride may also be used as anodes in practical battery devices.

The high surface area of metal foam electrowinning cathodes **24** coated with nickel niobate and reduced graphene oxide, provides the basis for an efficient and long lasting anode for battery energy storage systems.

Likewise the high surface area of ceramic foam electrowinning cathodes **24** coated with nickel manganese cobalt NMC 811 or lithium nickel manganese oxide (LNMO) or lithium cobalt oxide (LCO) and graphene, provides the basis for an efficient and long lasting cathode for battery energy storage systems.

During decontamination of the graphite, graphene oxide or graphene is deposited on the electrowinning cathodes. Reduced graphene oxide (rGO) may be synthesized from graphene oxide using ultrasound as described previously. RGO anodes and graphene cathodes combined with the porous morphology, high electrical conductivity and fast surface reactions, delivers high energy and power density needed for advanced battery and supercapacitor applications.

Polyaniline (PANI) has received attention due to its unique properties. Reduced graphene oxide/polyaniline (rGO/PANI) composite was prepared by a simple and cost-effective fabrication method of formation by mixing and sonication in various conditions.

Hierarchical nanostructured conducting polymer hydrogel with high electrochemical activity. Hydrogels are polymeric networks that have a high level of hydration and three-dimensional (3D) microstructures bearing similarities to natural tissues. Hydrogels based on conducting polymers [e.g., polythiophene, polyaniline (PAni), and polypyrrole] combine the unique properties of hydrogels with the electrical and optical properties of metals or semiconductors thus offering an array of features such as intrinsic 3D microstructured conducting frameworks that promote the transport of charges, ions, and molecules. Conducting polymer hydrogels provide an excellent interface between the electronic-transporting phase (electrode) and the ionic-transporting phase (electrolyte), between biological and synthetic systems, as well as between soft and hard materials. As a result, conducting polymer hydrogels have demonstrated great potential for a broad range of applications from energy storage devices such as biofuel cells and supercapacitors, to molecular and bioelectronics and medical electrodes. Multifunctional polyaniline (PAni) hydrogel has excellent electronic conductivity and electrochemical properties. With high surface area and three-dimensional porous nanostructures, the PAni hydrogels demonstrated potential as high-performance supercapacitor electrodes with high specific capacitance (~480 F·g(-1)), unprecedented rate capability, and cycling stability showed capacitance retention as high as -91% over 5,000 cycles and (~83% capacitance retention after 10,000 cycles).

Doped polyesteramide hydrogel, displays micropores, as well as nanometric pores, homogeneously distributed throughout the whole surface, presents better properties as a solid-like electrolyte than doped biohydrogels with pseudo-honeycomb and compact heterogeneous structures. Indeed, the polyesteramide hydrogel shows a low electrical resistance, a high capacitance and good interfacial contact with the electrode, thus meeting the electrical requirements of solid-like electrolytes for supercapacitors. The full characterization of the hydrogel solid-like electrolytes by electrochemical impedance spectroscopy (EIS) provides additional valuable data (i.e., ionic and capacitive properties) to select the most adequate system. In addition, the hydrogel morphology, which has a significant effect on the device performance, is required to be highly porous and open. The correct optimization of these parameters would improve the application of biopolymer-derived hydrogels in light and wearable flexible devices.

There are numerous other electrolytes and cathode/electrolyte combinations which may be used. The electric car industry is projecting that anode free solid-state batteries (AFSSB) and hybrid supercapacitor-batteries are the way forward. Eliminating anodes simplifies the battery design, enhances performance, and reduces costs.

Porous open cell 3D electrowinning cathodes coated with RGO and graphene may be used to form high-performance hybrid supercapacitor- batteries with ultrahigh energy density for energy storage devices. Metal oxide and carbon /3D graphene and RGO nanocomposites may be used as the negative and positive electrodes with high specific capacity, ultrahigh energy density and high power density.

In order to stabilize and encapsulate the battery/ultracapacitor within the ILW 3m3 box liner and battery/ultracapacitor casing **44,** a geopolymer encapsulant **40** or concrete grout may be used as shown in Figure 9C and Figure 11C.

Another important application is the production of fuel cells. As mentioned previously graphene derived materials provide superior properties and high-performance criteria necessary for components used within fuel cells. Other applications include but not limited to, conventional and electrolytic filters, membranes, supercapacitors, solar cells, beta-voltaic radioscope power sources, and electronics.

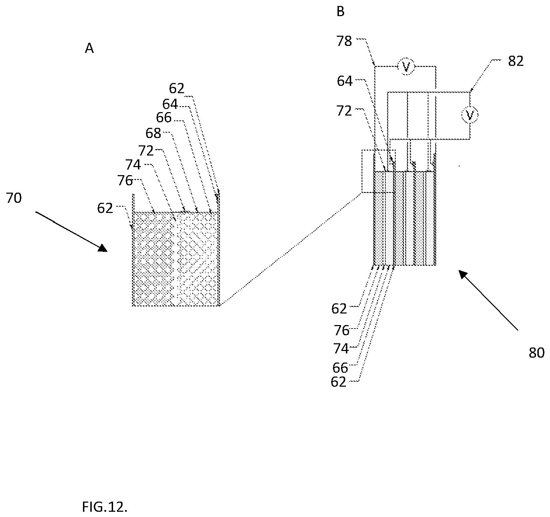

Alpha and or Beta-voltaic radioscope power sources are devices that directly convert alpha and beta ionised radiation particles from alpha and beta emitting sources (americium 241, tritium, nickel-63 and carbon-14) from irradiated graphite into electrical energy. These contaminants retained by the electrowinning cathodes provides the source for this power which when configured with a semiconducting converter such as 4H silicon carbide, provides a long duration, compact power source for applications in remote or extreme environments like nuclear waste disposal sites and space exploration. Figure 12 shows a hybrid graphene alpha/beta/gamma battery **70** and ultracapacitor **80.** Referring to Figure 12A, the graphene alpha/beta/gamma bipolar battery cell **70** comprises ultracapacitor bi-polar current collectors **62,** an alpha/beta/gamma battery current collector **64,** an n-type coated porous nickel foam anode **66,** a gel polymer electrolyte and spacer **74,** and a porous nickel foam cathode **76.**

The n-type coated porous nickel foam anode **66** is coated with graphene and beta emitting contamination **68** from the electrowinning process. The graphene makes a Schottky junction **72** with the n-type coated porous nickel foam **66** and creates an internal electric field to separate electron hole pairs in the depletion region. Other methods such as p-n type junctions and p-i-n type junctions may be used. Beta radiation is emitted from the beta emitting contamination **68** coated on the porous nickel foam anode **66.** A good candidate for the n-type coating is nickel silicide and/or cubic or hex boron nitride which has excellent structural and thermal properties to prevent thermal run away.

Referring to Figure 12B, an ultracapacitor **80** comprising a stacked arrangement of bi-polar beta battery cells **70** is shown. The stacked bi-polar alpha/beta/gamma battery cells **70** are connected by the bi-polar ultracapacitor circuit **78** and the bi-polar alpha/beta/gamma battery circuity **82.** The bi-polar ultracapacitor **60** may generate high energy and high power for hundreds of thousands of cycles. The hybrid bi-polar graphene alpha/beta/gamma battery cell **70** may generate high energy and low-medium power for up to thousands of years based on the half-life of the beta emitting radionuclides. The hybrid bi-polar graphene alpha/beta/gamma battery and ultracapacitor may be installed in a ILW 3m³ or 4M box for energy storage applications and may be used to power critical mission applications and safety systems where uninterrupted power supplies are required.

Various further aspects and embodiments of the present invention will be apparent to those skilled in the art in view of the present disclosure. The invention is defined in the appended claims. "and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments which are described.

It will further be appreciated by those skilled in the art that although the invention has been described by way of example with reference to several embodiments. It is not limited to the disclosed embodiments and that alternative embodiments could be constructed without departing from the scope of the invention as defined in the appended claims.

## Claims

1. A method for sonoelectrochemically decontaminating irradiated nuclear graphite, the method comprising:
suspending the irradiated nuclear graphite in an electrolyte (14);
circulating the electrolyte through a flow reactor;
subjecting the irradiated nuclear graphite to a sonoelectrochemical treatment comprising one or more electrochemical and ultrasonic cycles; wherein
the sonoelectrochemical treatment exfoliates contaminated graphene and/or graphene derivatives from the irradiated nuclear graphite into the electrolyte;
collecting the contaminated graphene and/ or graphene derivatives removed from the irradiated nuclear graphite on one or more cathodes (24).

2. The method according to claim 1, wherein one or more of the cathodes comprises a current collector layer and the method further comprises the step of collecting the contaminated graphene and/or graphene derivatives s removed from the irradiated nuclear graphite onto the current collectors and one or more cathodes.

3. The method according to any of the preceding claims, comprising immersing the irradiated nuclear graphite in one or more acid or alkali oxidising agents.

4. The method according to any of the preceding claims, further comprising the step of pressurising the electrolyte.

5. The method according to any of the preceding claims, comprising immersing the irradiated nuclear graphite in a molten salt electrolyte.

6. The method according to claim 1 wherein the contaminated graphene and/or graphene derivatives removed from the irradiated nuclear graphite and collected on one or more cathodes comprises one or more of graphene, graphene derivatives, 14C, activated metals, lanthanides and actinides.

7. The method according to any of the preceding claims, comprising subjecting the irradiated nuclear graphite to continuous electrochemical and ultrasonic cycles or a plurality of alternating electrochemical and ultrasonic pulses.

8. A sonoelectrochemical device (10) for removing contaminated graphene and/ or graphene derivatives from irradiated nuclear graphite suspended in an electrolyte (14), **characterized in that** the device comprises a flow reactor configured to circulate the irradiated nuclear graphite and electrolyte suspension, wherein the flow reactor comprises:
an anode (22) in contact with the electrolyte;
one or more cathodes (24) in contact with the electrolyte and configured to receive the contaminated graphene and/or graphene derivatives from the electrolyte;
one or more ultrasonic transducers (12) in contact with the electrolyte; and
a controller (16, 20) configured to apply ultrasound to the electrolyte through the one or more ultrasonic transducers and an electrical potential between the anode and one or more cathodes to cause the exfoliation of contaminated graphene and/or graphene derivatives from the irradiated nuclear graphite into the electrolyte.

9. The device according to claim 8, wherein the anode is an anode basket or an anode tube.

10. The device according to either of claims 8 or 9, wherein the one or more cathodes comprise metal, metal oxide, carbon, or ceramic.

11. The device according to any of claims 8 to 10, wherein the one or more cathodes is a metal or ceramic foam and/or is an open cell matrix.

12. The device according to any of claim 8 to 11, wherein the one or more cathodes are hollow.

13. The device according to any of claims 8 to 12, wherein the one or more cathodes are coated.

14. The device according to any of claims 8 to 13, wherein the one or more cathodes comprise one or more current collectors.

15. The device according to any of claims 8 to 14, wherein the one or more cathodes are replaceable.

## Patentansprüche

1. Verfahren zur sonoelektrochemischen Dekontamination von bestrahltem Nukleargraphit, wobei das Verfahren Folgendes umfasst:
Suspendieren des bestrahlten Nukleargraphits in einem Elektrolyten (14);
Zirkulierenlassen des Elektrolyten durch einen Durchflussreaktor;
Unterziehen des bestrahlten Nukleargraphits einer sonoelektrochemischen Behandlung, die einen oder mehrere elektrochemische Zyklen und Ultraschallzyklen umfasst; wobei
die sonoelektrochemische Behandlung kontaminiertes Graphen und/oder kontaminierte Graphenderivate von dem bestrahlten Nukleargraphit in den Elektrolyten ablöst;
Sammeln des kontaminierten Graphens und/oder der kontaminierten Graphenderivate, das/die von dem bestrahlten Nukleargraphit entfernt wurde/n, auf einer oder mehreren Kathoden (24).

2. Verfahren nach Anspruch 1, wobei eine oder mehrere der Kathoden eine Stromkollektorschicht umfassen und das Verfahren ferner den Schritt des Sammelns des kontaminierten Graphens und/oder der kontaminierten Graphenderivate, das/die von dem bestrahlten Nukleargraphit entfernt wurde/n, auf den Stromkollektoren und einer oder mehreren Kathoden umfasst.

3. Verfahren nach einem der vorhergehenden Ansprüche, umfassend Eintauchen des bestrahlten Nukleargraphits in ein oder mehrere saure oder alkalische Oxidationsmittel.

4. Verfahren nach einem der vorhergehenden Ansprüche, ferner umfassend den Schritt des Druckbeaufschlagens des Elektrolyten.

5. Verfahren nach einem der vorhergehenden Ansprüche, umfassend Eintauchen des bestrahlten Nukleargraphits in einen Elektrolyten aus geschmolzenem Salz.

6. Verfahren nach Anspruch 1, wobei das kontaminierte Graphen und/oder die kontaminierten Graphenderivate, das/die von dem bestrahlten Nukleargraphit entfernt und auf einer oder mehreren Kathoden gesammelt wurde/n, eines oder mehrere von Graphen, Graphenderivaten, 14C, aktivierten Metallen, Lanthaniden und Actiniden umfasst/umfassen.

7. Verfahren nach einem der vorhergehenden Ansprüche, umfassend Unterziehen des bestrahlten Nukleargraphits kontinuierlichen elektrochemischen Zyklen und Ultraschallzyklen oder einer Vielzahl von abwechselnden elektrochemischen Impulsen und Ultraschallimpulsen.

8. Sonoelektrochemische Vorrichtung (10) zur Entfernung von kontaminiertem Graphen und/oder kontaminierten Graphenderivaten von bestrahltem, in einem Elektrolyten (14) suspendiertem Nukleargraphit,
**dadurch gekennzeichnet, dass** die Vorrichtung einen Durchflussreaktor umfasst, der dazu konfiguriert ist, die bestrahlte Nukleargraphit- und Elektrolytsuspension zirkulieren zu lassen, wobei der Durchflussreaktor Folgendes umfasst:
eine Anode (22) in Kontakt mit dem Elektrolyten;
eine oder mehrere Kathoden (24) in Kontakt mit dem Elektrolyten, die dazu konfiguriert sind, das kontaminierte Graphen und/oder die kontaminierten Graphenderivate von dem Elektrolyten aufzunehmen;
einen oder mehrere Ultraschallwandler (12) in Kontakt mit dem Elektrolyten; und
eine Steuerung (16, 20), die dazu konfiguriert ist, Ultraschall durch den einen oder die mehreren Ultraschallwandler an den Elektrolyten und ein elektrisches Potenzial zwischen der Anode und einer oder mehreren Kathoden anzulegen, um das Ablösen von kontaminiertem Graphen und/oder kontaminierten Graphenderivaten von dem bestrahlten Nukleargraphit in den Elektrolyten zu bewirken.

9. Vorrichtung nach Anspruch 8, wobei die Anode ein Anodenkorb oder ein Anodenrohr ist.

10. Vorrichtung nach einem der Ansprüche 8 oder 9, wobei die eine oder mehreren Kathoden Metall, Metalloxid, Kohlenstoff oder Keramik.

11. Vorrichtung nach einem der Ansprüche 8 bis 10, wobei es sich bei der einen oder den mehreren Kathoden um einen Metall- oder Keramikschaum und/oder eine offenzellige Matrix handelt.

12. Vorrichtung nach einem der Ansprüche 8 bis 11, wobei die eine oder mehreren Kathoden hohl sind.

13. Vorrichtung nach einem der Ansprüche 8 bis 12, wobei die eine oder mehreren Kathoden beschichtet sind.

14. Vorrichtung nach einem der Ansprüche 8 bis 13, wobei die eine oder mehreren Kathoden einen oder mehrere Stromkollektoren umfassen.

15. Vorrichtung nach einem der Ansprüche 8 bis 14, wobei die eine oder mehreren Kathoden austauschbar sind.

## Revendications

1. Procédé de décontamination sonoélectrochimique de graphite nucléaire irradié, le procédé comprenant :
la suspension du graphite nucléaire irradié dans un électrolyte (14) ;
la mise en circulation de l'électrolyte au travers d'un réacteur à écoulement ;
la soumission du graphite nucléaire irradié à un traitement sono-électrochimique comprenant un ou plusieurs cycles électrochimiques et ultrasonores ; dans lequel
le traitement sonoélectrochimique exfolie du graphène et/ou des dérivés de graphène contaminés du graphite nucléaire irradié dans l'électrolyte ;
la collecte du graphène et/ ou des dérivés de graphène contaminés retirés du graphite nucléaire irradié sur une ou plusieurs cathodes (24).

2. Procédé selon la revendication 1, dans lequel une ou plusieurs des cathodes comprennent une couche de collecteurs de courant et le procédé comprend en outre l'étape de collecte du graphène et/ou des dérivés de graphène contaminés retirés du graphite nucléaire irradié sur les collecteurs de courant et une ou plusieurs cathodes.

3. Procédé selon l'une quelconque des revendications précédentes, comprenant l'immersion du graphite nucléaire irradié dans un ou plusieurs agents oxydants acides ou alcalins.

4. Procédé selon l'une quelconque des revendications précédentes, comprenant en outre l'étape de mise sous pression de l'électrolyte.

5. Procédé selon l'une quelconque des revendications précédentes, comprenant l'immersion du graphite nucléaire irradié dans un électrolyte de sel fondu.

6. Procédé selon la revendication 1, dans lequel le graphène et/ou les dérivés de graphène contaminés retirés du graphite nucléaire irradié et collectés sur une ou plusieurs cathodes comprennent un ou plusieurs parmi du graphène, des dérivés de graphène, du 14C, des métaux activés, des lanthanides et des actinides.

7. Procédé selon l'une quelconque des revendications précédentes, comprenant la soumission du graphite nucléaire irradié à des cycles électrochimiques et ultrasoniques continus ou à une pluralité d'impulsions électrochimiques et ultrasoniques alternées.

8. Dispositif sonoélectrochimique (10) pour le retrait de graphène contaminé et/ ou de dérivés de graphène de graphite nucléaire irradié en suspension dans un électrolyte (14), **caractérisé en ce que** le dispositif comprend
un réacteur à écoulement conçu pour faire circuler le graphite nucléaire irradié et la suspension d'électrolyte, dans lequel le réacteur à écoulement comprend :
une anode (22) en contact avec l'électrolyte ;
une ou plusieurs cathodes (24) en contact avec l'électrolyte et conçues pour recevoir du graphène et/ou des dérivés de graphène contaminés de l'électrolyte ;
un ou plusieurs transducteurs ultrasonores (12) en contact avec l'électrolyte ; et
un dispositif de commande (16, 20) conçu pour appliquer des ultrasons à l'électrolyte au travers des un ou plusieurs transducteurs ultrasonores et un potentiel électrique entre l'anode et une ou plusieurs cathodes pour entraîner l'exfoliation du graphène et/ou des dérivés de graphène contaminés du graphite nucléaire irradié dans l'électrolyte.

9. Dispositif selon la revendication 8, dans lequel l'anode est un panier d'anode ou un tube d'anode.

10. Dispositif selon l'une ou l'autre des revendications 8 ou 9, dans lequel les une ou plusieurs cathodes comprennent un métal, un oxyde métallique, du carbone ou une céramique.

11. Dispositif selon l'une quelconque des revendications 8 à 10, dans lequel les une ou plusieurs cathodes est une mousse métallique ou céramique et/ou est une matrice à cellules ouvertes.

12. Dispositif selon l'une quelconque de la revendication 8 à 11, dans lequel les une ou plusieurs cathodes sont creuses.

13. Dispositif selon l'une quelconque des revendications 8 à 12, dans lequel les une ou plusieurs cathodes sont revêtues.

14. Dispositif selon l'une quelconque des revendications 8 à 13, dans lequel les une ou plusieurs cathodes comprennent un ou plusieurs collecteurs de courant.

15. Dispositif selon l'une quelconque des revendications 8 à 14, dans lequel les une ou plusieurs cathodes sont remplaçables.
